# EUROPEAN PATENT APPLICATION

(11) **EP 2 362 327 A1**
(43) Date of publication of application: **31.08.2011**
(21) Application number: 10154161.3
(22) Date of filing: 19.02.2010
(51) Int. Cl.: G06K 9/20, G06T 7/60

(54) **Method, device and system for image capture, processing and storage**

(71) Applicant: RESEARCH IN MOTION LIMITED, Waterloo, Ontario N2L 3W8 (CA)
(72) Inventor: Griffin, Jason, Tyler, Waterloo, Ontario N2L 3W8 (CA); Ladoucer, Norman, Miner, Waterloo, Ontario N2L 3W8 (CA); Wood, Todd, Andrew, Waterloo, Ontario N2L 3W8 (CA)
(74) Representative: MERH-IP Matias Erny Reichl Hoffmann

(57) **Abstract**

A method for image data capture and storage is provided, where a reference and an image are optically captured and then processed. The reference is used to assist in determining a normalization operation that can be performed in order to correct for skew, rotation, and other events that can occur during capture of an image. The reference is also used to determine a data schema which is used for storing the normalized image.

## Description

### FIELD

The present specification relates generally to computing devices and more specifically relates to a method, device and system for image capture, processing and storage.

### BACKGROUND

Electronic devices, including mobile electronic devices, are supplanting the use of traditional paper-based media, leading to the oft-cited goal of purely electronic, "paperless" environments. For example, it is known to employ image scanning techniques to store electronic representations of images. The portable document format (PDF) is an example of a common format for storing such images. Further enhancements to pure image capture of documents include the use of optical character recognition (OCR), so that the captured document becomes searchable, and can also be converted into a purely electronic data which can be manipulated and viewed in word processors and other applications.

There remain serious deficiencies in the prior art. For example, mobile electronic devices are often quite limited in their processing resources, so it is difficult or impractical to equip such devices with OCR. While enhancements to hardware and software algorithms may obviate or mitigate this problem, the fact remains that present hardware and software is limited, and there still remains a further problem that even advanced OCR processing hardware and software still struggle to process handwriting, and particularly cursive handwriting which varies from person to person and is difficult to parse. Practically speaking, paper and related media continue to be difficult to completely replace with electronic environments.

US Patent 6,782,144 to Bellavita discloses a document scanner system and method that operates in conjunction with a document imprinted with data in a plurality of image fields and a plurality of form documents adapted to have data imprinted thereon. The method scans to obtain positional information of data fields or accepts topological form input by the operator. Data is extracted from each field and is decoded or calculated, then validated. The decoded or calculated data is then stored in an output sequence. Of note is Bellavita ultimately contemplates the decoding or calculating of data, via OCR or other technique. Accordingly, at least one deficiency of Bellavita is that the method of Bellavita runs the risk that a failure of such decoding leads to an unusable or incorrect output sequence, or requires the need for an operator to manually correct for such errors.

US Patent 6,820,096 to Kanevsky discloses an external calendar that is connected to the Internet and which attempts to provide copies of the calendar, rewrite information on one calendar to another, and create a way to check calendar dates. Kanevsky contemplates a paper calendar, the image of which can be picked up a camera. The camera then sends the image to the central processing unit (CPU) of a computer. The CPU displays the image on its screen, as well as attempts to perform OCR in order to recognize character data and transform it into a digital format. Of note is that Kanevsky limits the OCR operation to the name of the month. By reading the name of the month, a projector then can project individual, previously-stored calendar entries onto given days of the month. Again, at least one deficiency of Kanevsky is that the method of Kanevsky runs the risk that a failure of the OCR process leads to an unusable or incorrect output sequence. In the end, in the paper calendar context, Kanevsky limits the OCR functionality to recognizing relatively unambiguous image data, such as the name of the month itself, but does not attempt to read actual calendar entries.

US Patent 7,035,913 to Culp discloses a system for obtaining and distributing calendar information from one or more calendar sources. One contemplated calendar source is an optical imaging device or scanner. Again, however, in order to implement the disclosure of Culp as it contemplates the optical imaging device, an OCR process is contemplated.

### SUMMARY

An aspect of this specification provides a method for image data capture and storage by an electronic device, the method comprising: optically capturing a reference and an image; matching the reference with a stored reference; determining a normalizing operation to normalize the reference based on a comparison between the reference and the stored reference; generating a normalized image by applying the normalizing operation to the image; decoding the reference to obtain a reference identifier; determining a data schema associated with the reference by the reference identifier, the data schema for mapping data to data records compatible with an executable application; and storing at least a portion of the normalized image as image data associated with at least one of the data records according to the data schema.

The method can further comprise determining a parsing operation associated with the reference; extracting the at least one portion of the normalized image according to the parsing operation; and storing the at least one extracted portion as image data associated with the data record. The parsing operation can be encoded within the reference and the determining the parsing operation can be effected by decoding the reference. The image can be an image of a calendar spanning a time period and the reference can identify the calendar and the time period. The reference can identify a plurality of sub-time periods within the time period. The at least one extracted portion comprises a plurality of portions that each correspond with each of the sub-time periods. The executable application can be a calendar application and each of the sub-time periods can correspond to sub-time period records within the calendar application. The time period can be one month and the sub-time periods can be days of the month. The days of the month on the calendar can be bounded by lines and the reference includes the lines. The at least one extracted portion can comprise one of the days.

The stored reference can optionally be configured to be only usable for determining the normalizing operation.

The data schema can be encoded within the reference and the determining of the data schema can be effected by decoding the reference.

The normalizing operation can comprise at least one of deskewing, enlarging, shrinking, rotating, and color-adjusting.

The reference can comprise a bar code.

The capturing can be performed using a camera of a portable electronic device.

The method can further comprise sending a captured digital representation of the reference and the image to a server from the portable electronic device. The matching, determining the normalizing operation, generating, decoding, determining the data schema, and the storing can be performed by the server.

The reference can be imprinted on a removable portion of the portable electronic device and for placement in conjunction with the image prior to the capturing.

The method can further comprise transmitting the image data associated with the data record to a computing device and executing the application on the computing device to display the normalized image at the computing device.

The method can further comprise requesting transmission of the data record to the computing device and the transmitting is responsive to the requesting.

The image can be an image of a three-dimensional article and various methods can further comprise calculating at least one dimension of the article based on at least one of the reference and the stored reference.

The image can be on a piece of paper. The image can be a page of a notebook. The reference can be imprinted onto the page and encodes a page number of the page.

The image can be an image of a whiteboard. The method can further comprise modifying the normalized image and projecting such modified image onto the whiteboard.

The method can further comprise performing edge-detection of the image to ascertain the outline of an object in the image in relation to its surroundings, calculating any one or more of a length, width and height of the object.

### BRIEF DESCRIPTION OF THE DRAWINGS

Figure 1 is a schematic representation of a front view of a portable electronic device.

Figure 2 is a schematic representation of a rear view of a portable electronic device.

Figure 3 is a block diagram of the electronic components of the device shown in Figures 1 and 2.

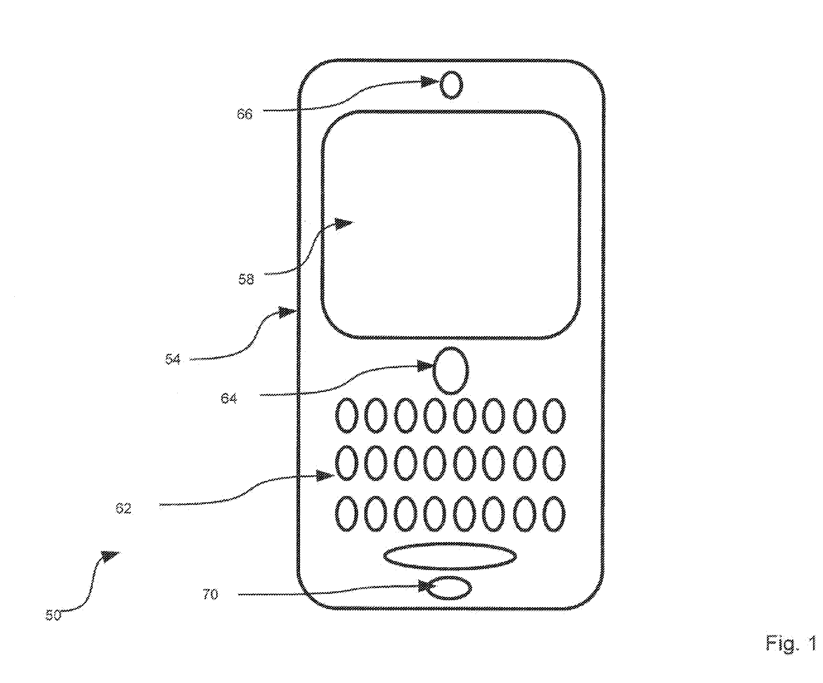

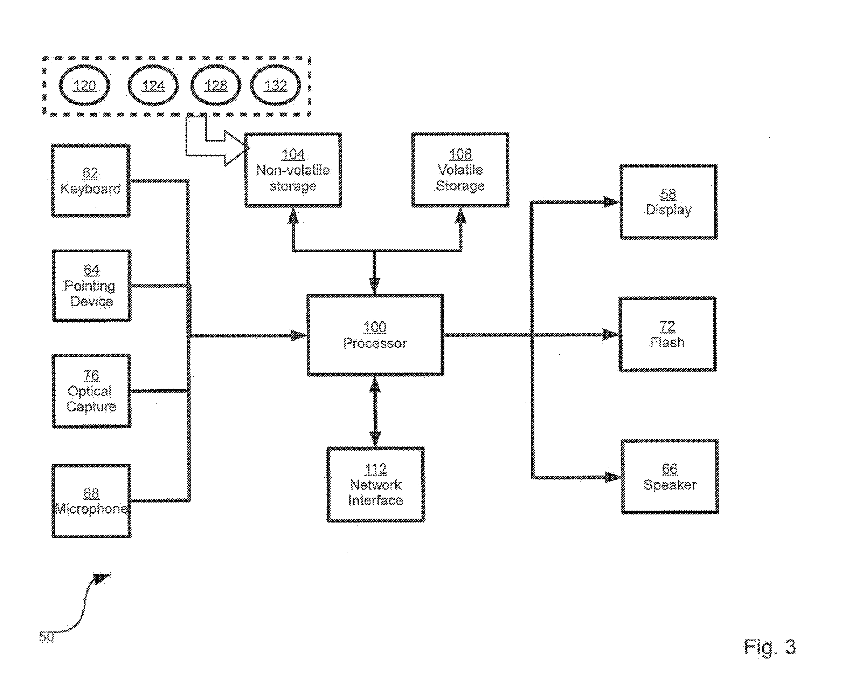

Figure 3 is an example of the web page shown in the system of Figure 1.

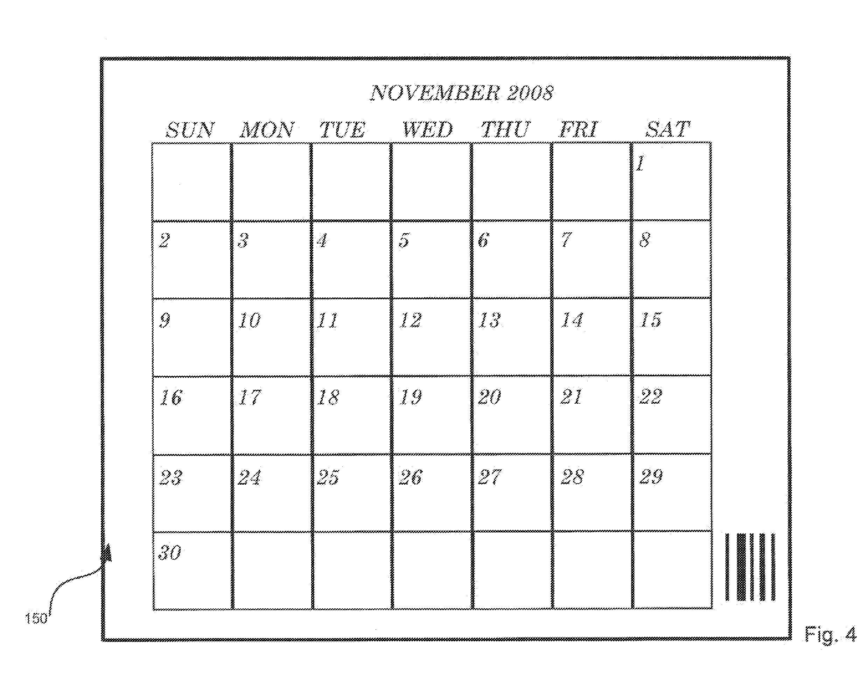

Figure 4 shows an example of a physical medium.

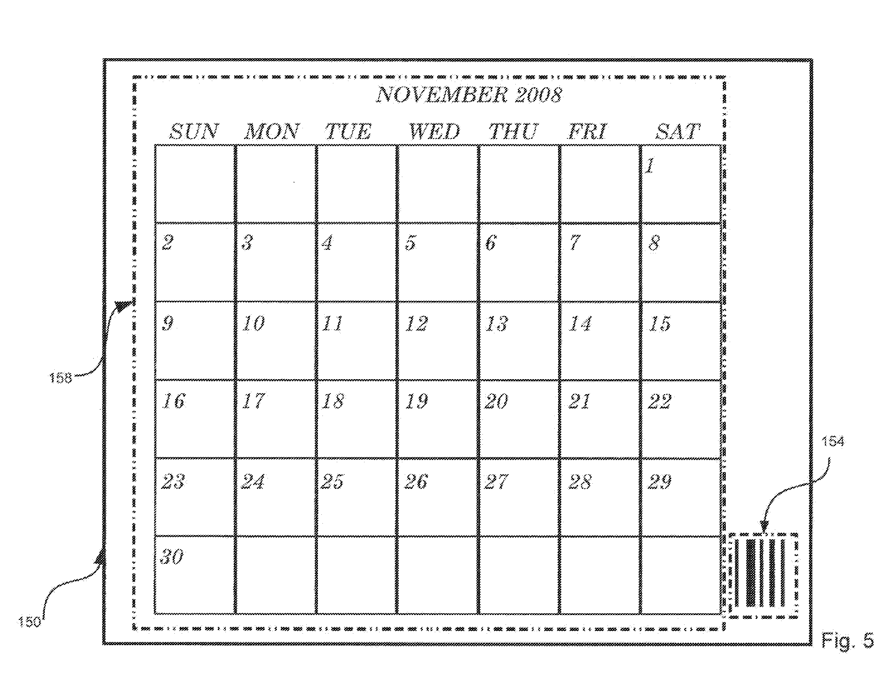

Figure 5 shows the physical medium of Figure 4 and identifying certain elements thereon.

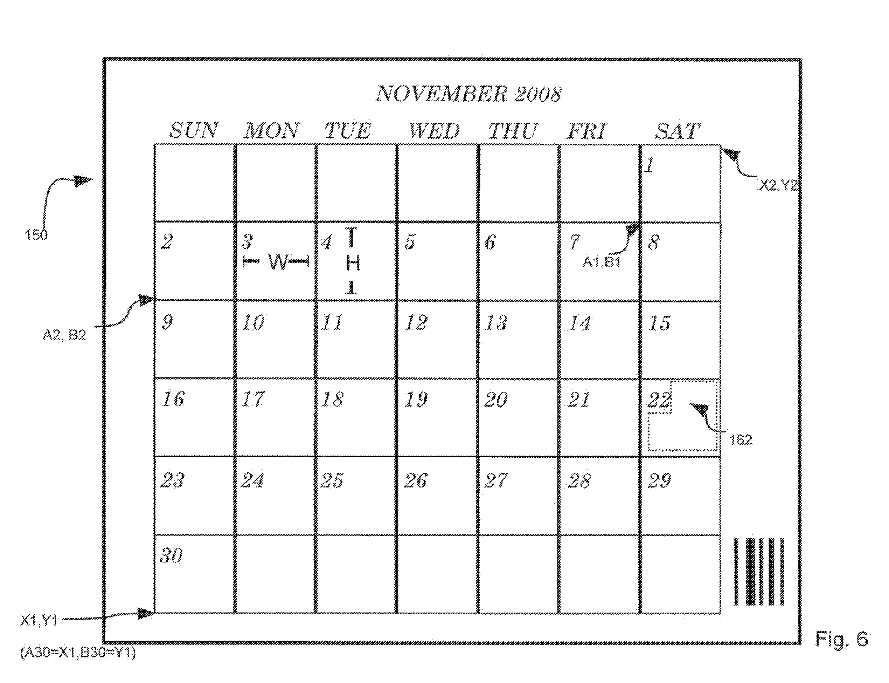

Figure 6 shows the physical medium of Figure 4 and identifying certain other elements thereon.

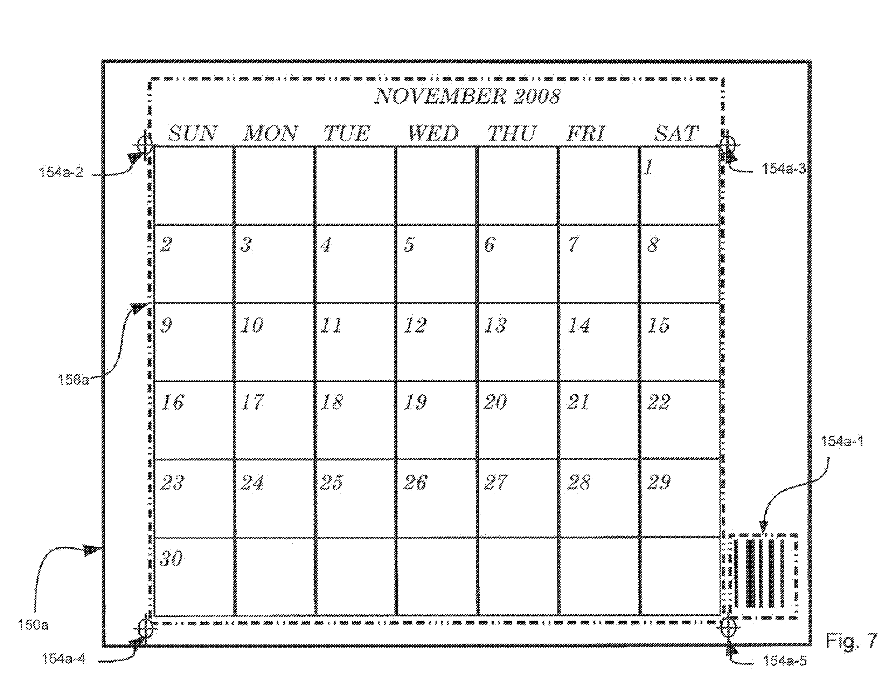

Figure 7 shows a variation on the physical medium of Figure 4.

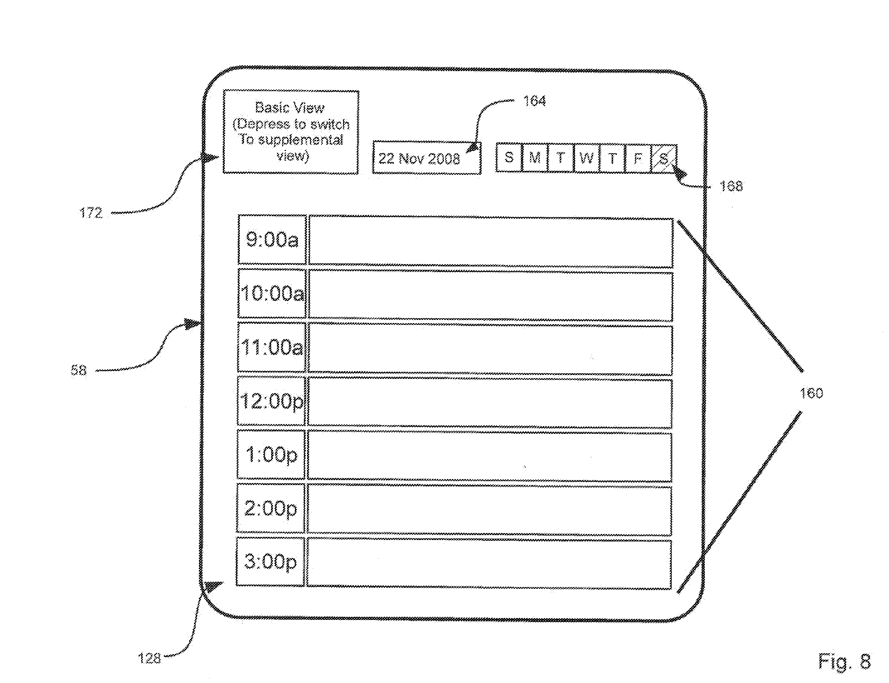

Figure 8 shows an example of an executable application from Figure 3.

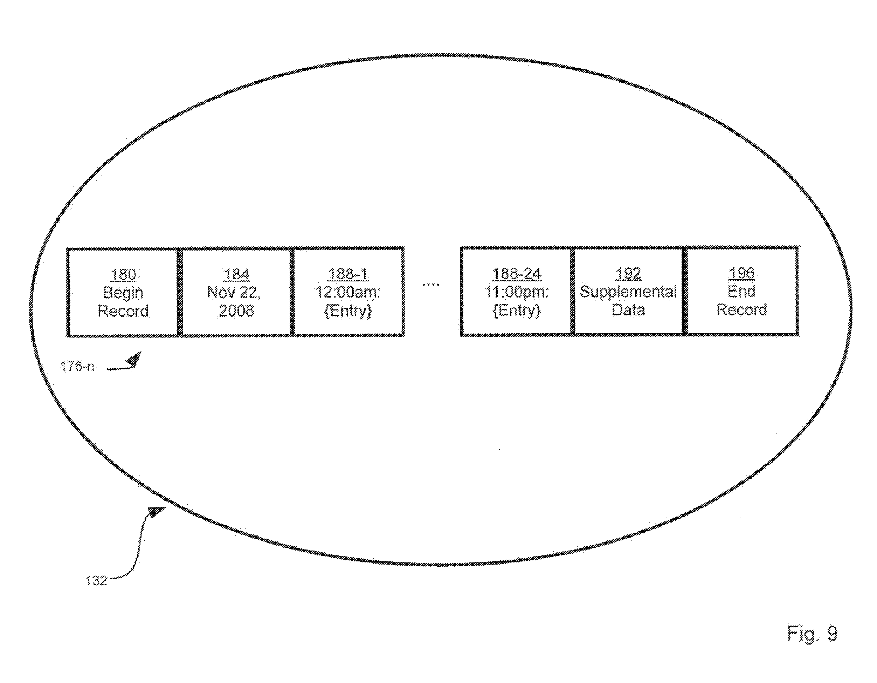

Figure 9 shows an example of a data record store from Figure 3 that corresponds to the executable application example of Figure 8.

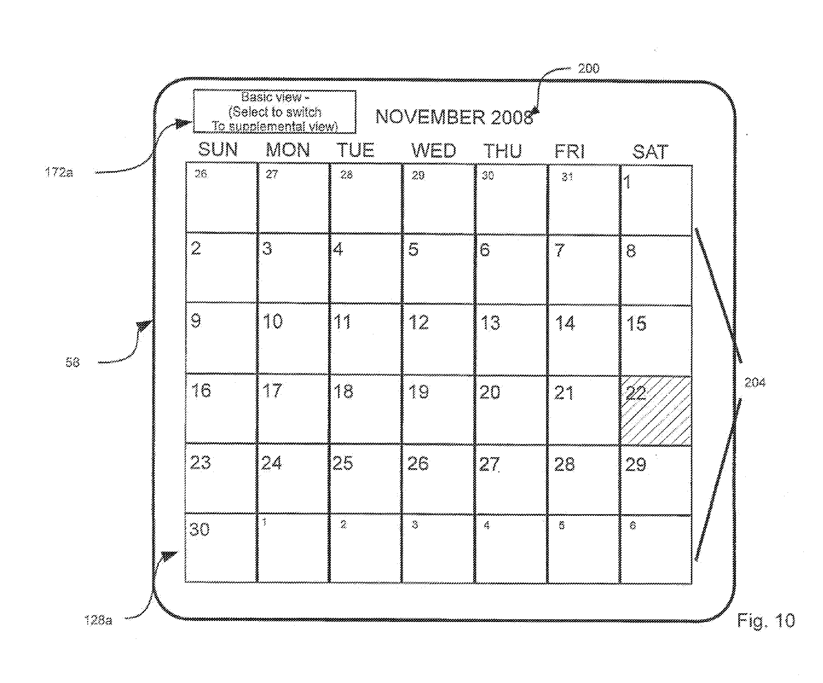

Figure 10 shows another example of an executable application from Figure 3.

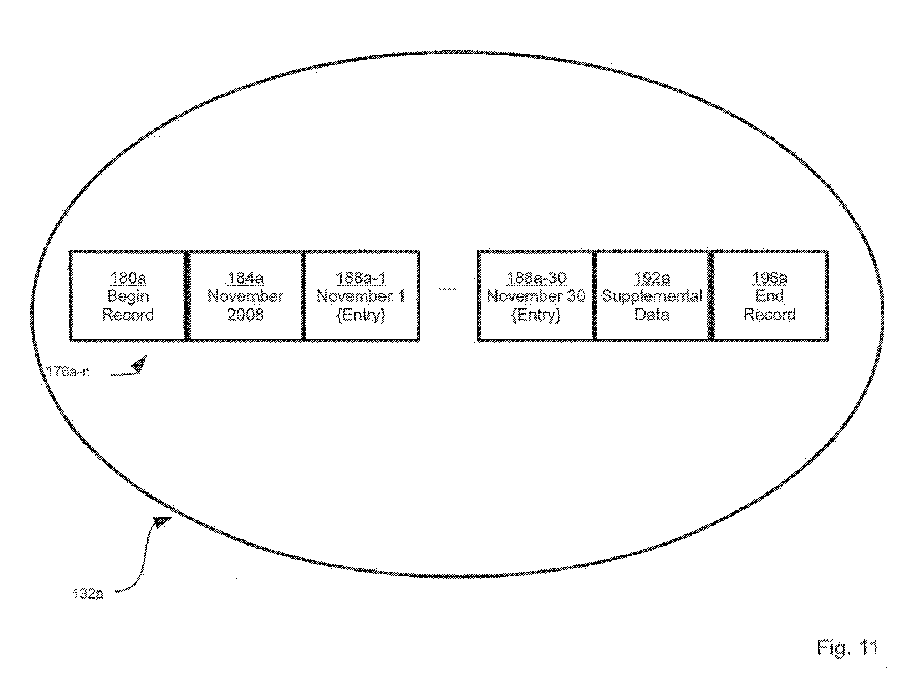

Figure 11 shows another example of a data record store from Figure 3 that corresponds to the executable application example of Figure 10.

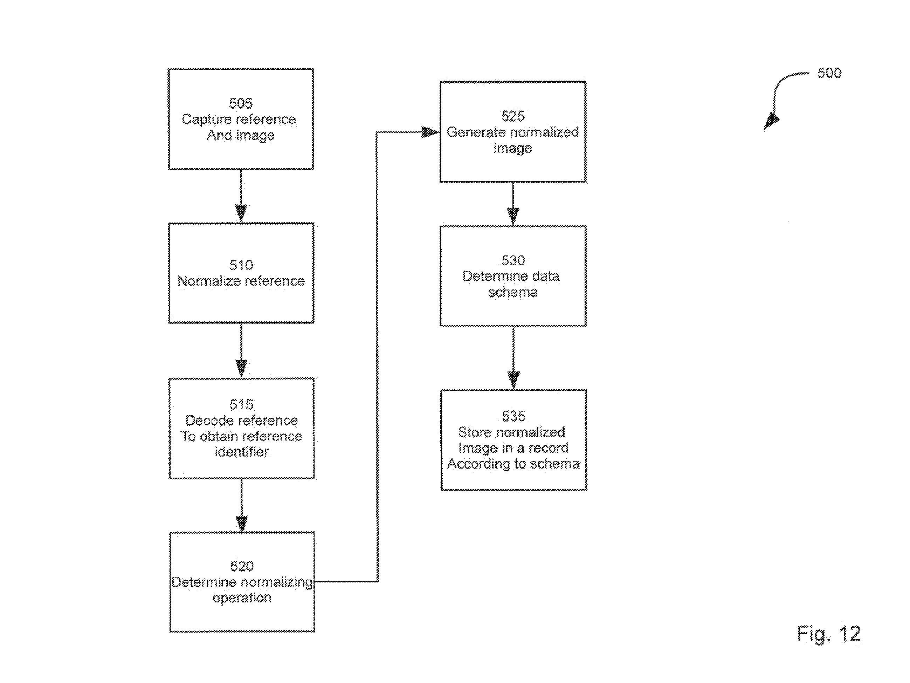

Figure 12 shows a flow chart depicting a method for image capture, processing and storage.

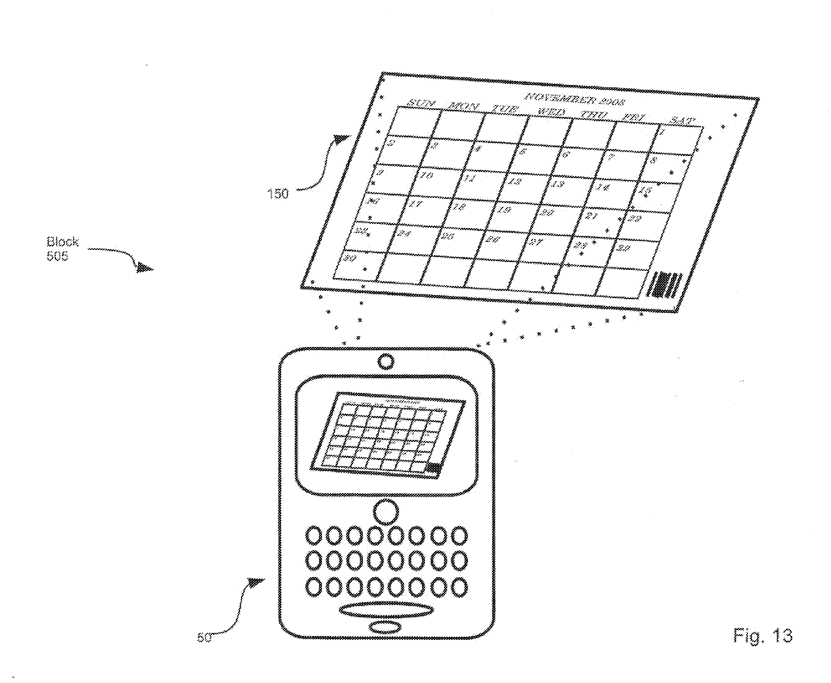

Figure 13 shows example performance of block 505 from the method of Figure 12.

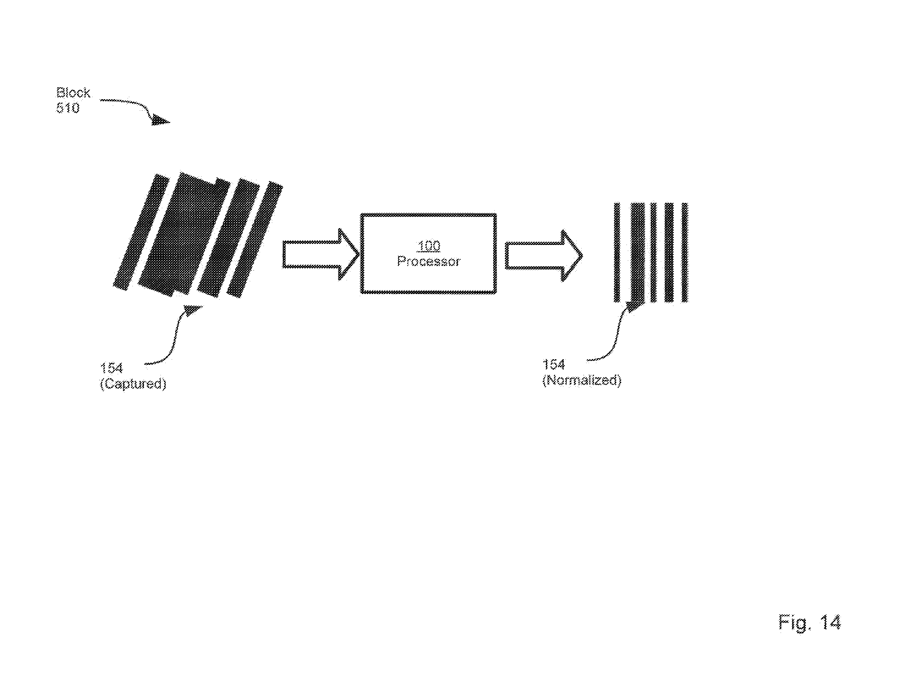

Figure 14 shows example performance of block 510 from the method of Figure 12.

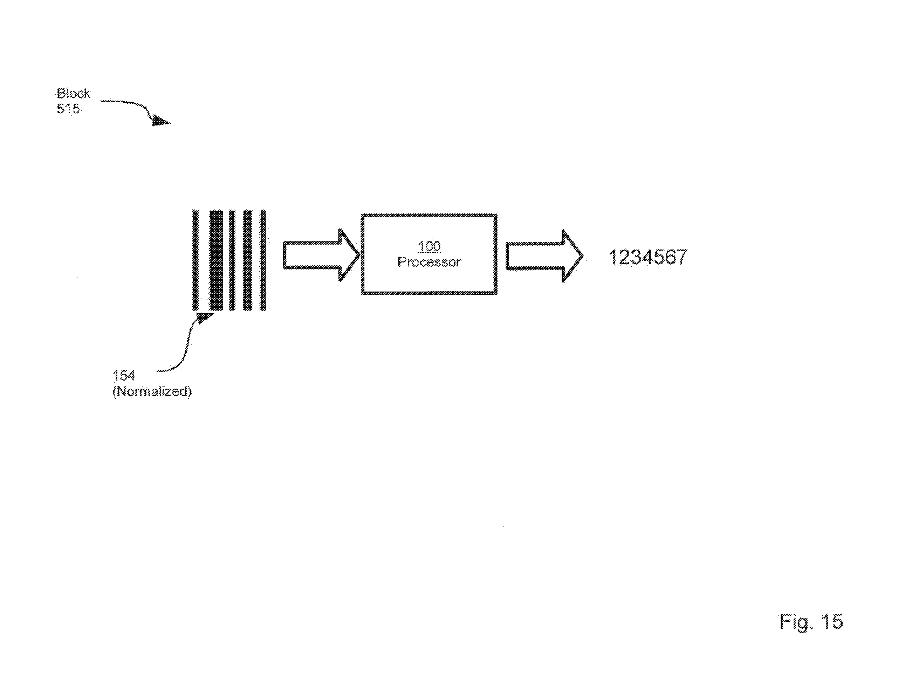

Figure 15 shows example performance of block 515 from the method of Figure 12.

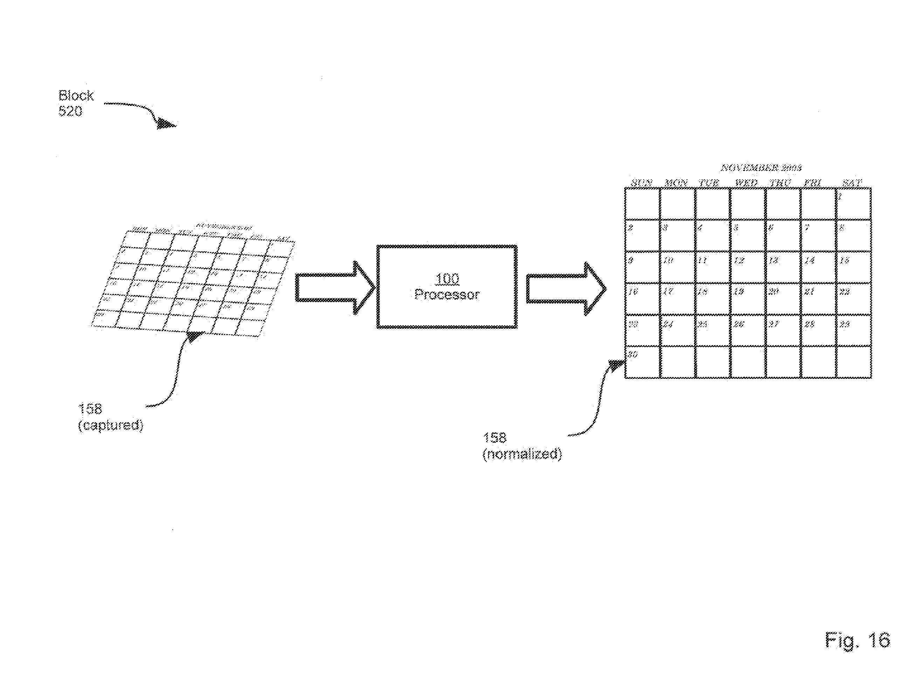

Figure 16 shows example performance of block 520 from the method of Figure 12.

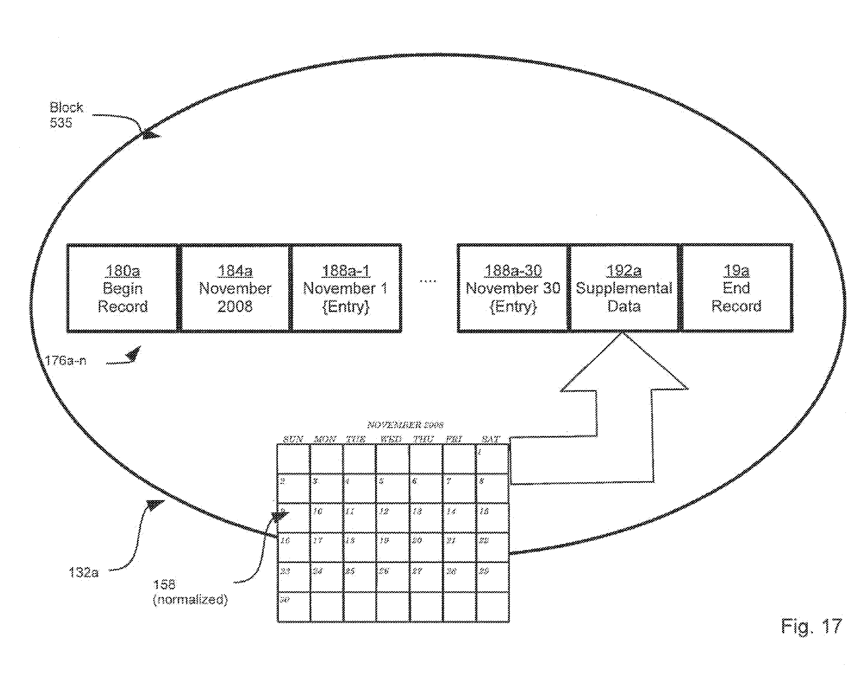

Figure 17 shows example performance of block 535 from the method of Figure 12.

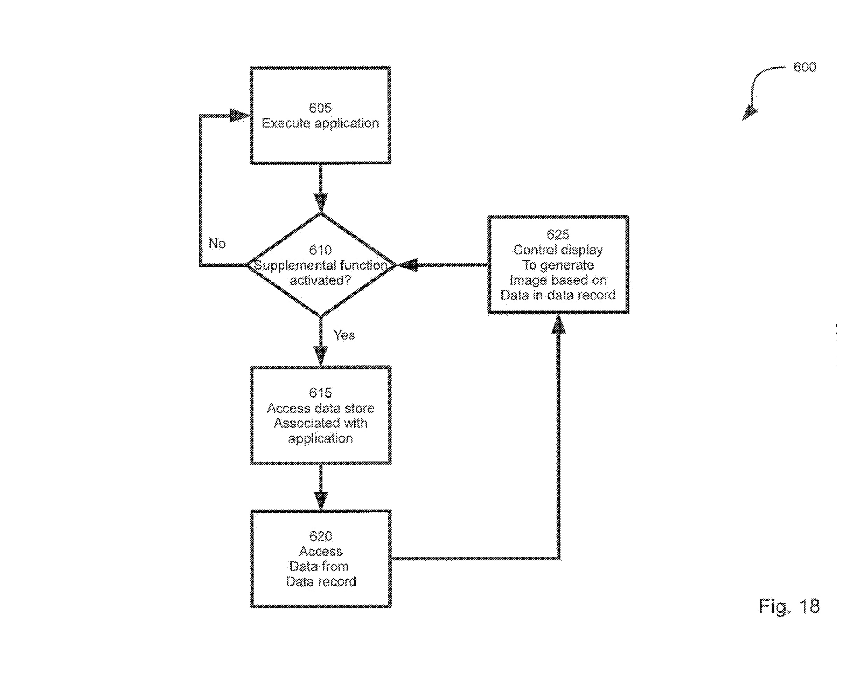

Figure 18 shows a flow chart depicting a method for executing an application for accessing an image that is captured and stored according to the method of Figure 12.

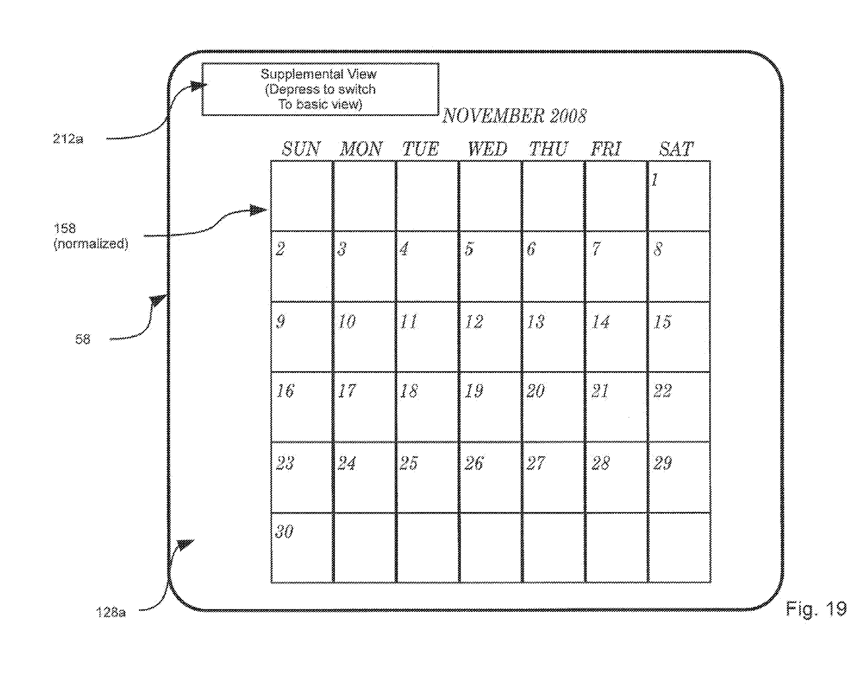

Figure 19 shows example performance of block 625 from the method of Figure 18.

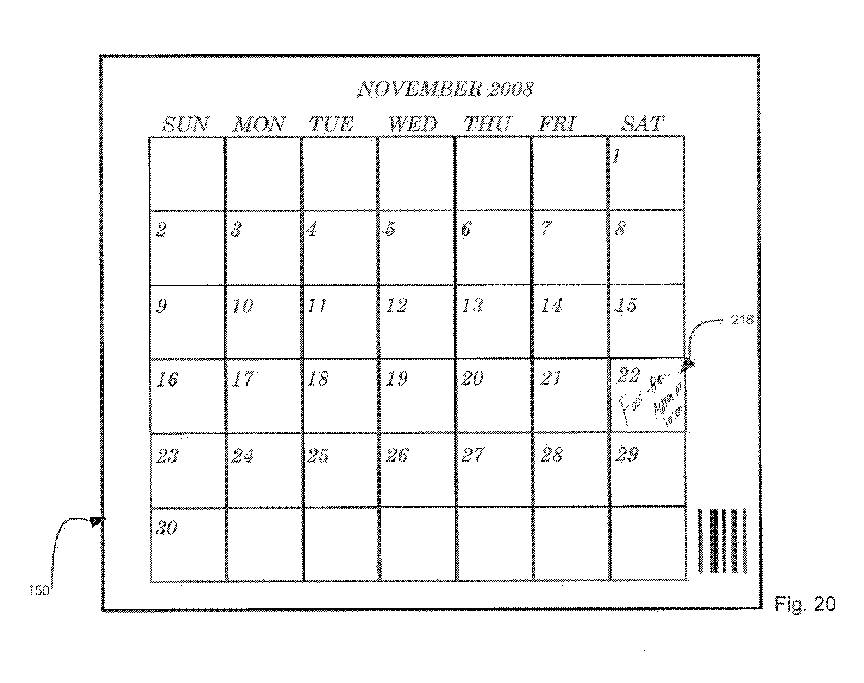

Figure 20 shows an example of handwritten text on the physical medium of Figure 4.

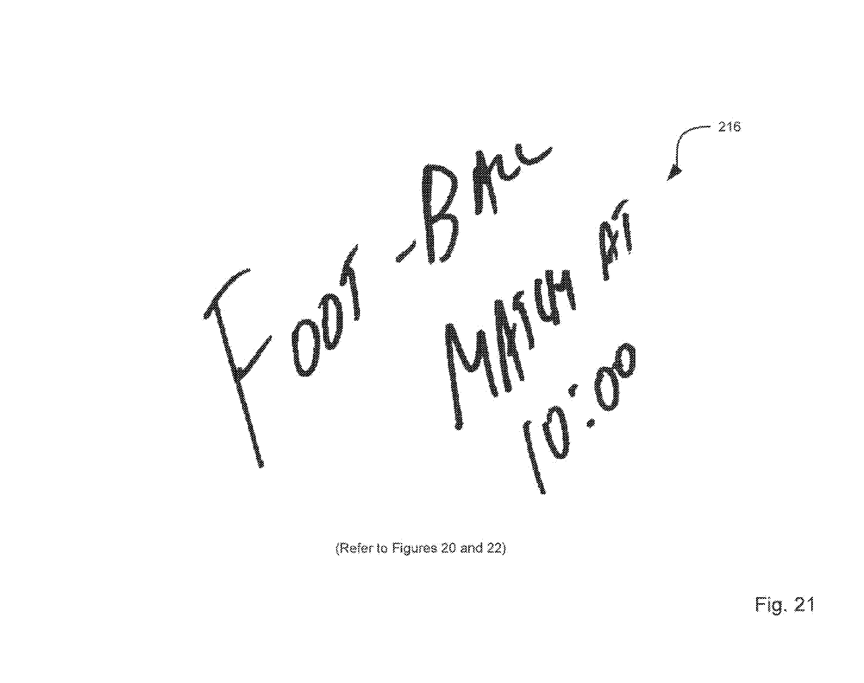

Figure 21 shows the handwritten text from Figure 20.

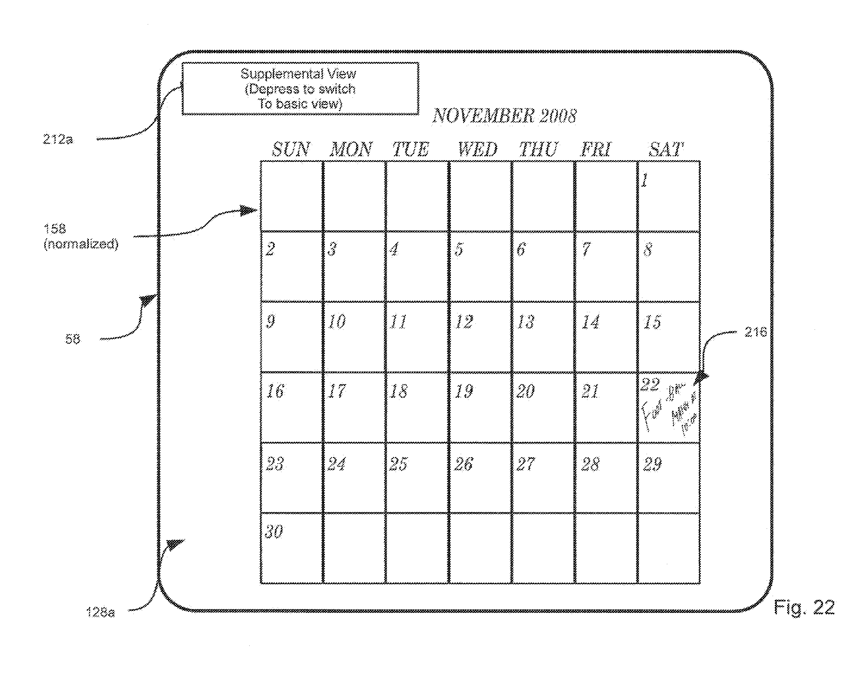

Figure 22 the view of Figure 19, but including the handwritten text of Figure 20 and Figure 21.

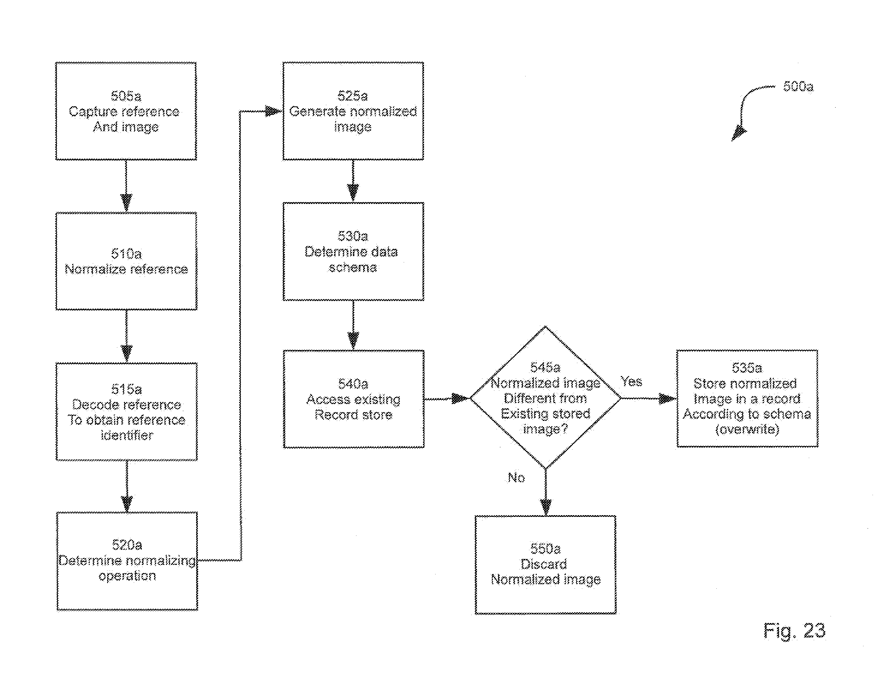

Figure 23 shows a flow chart depicting a method for image capture, processing and storage.

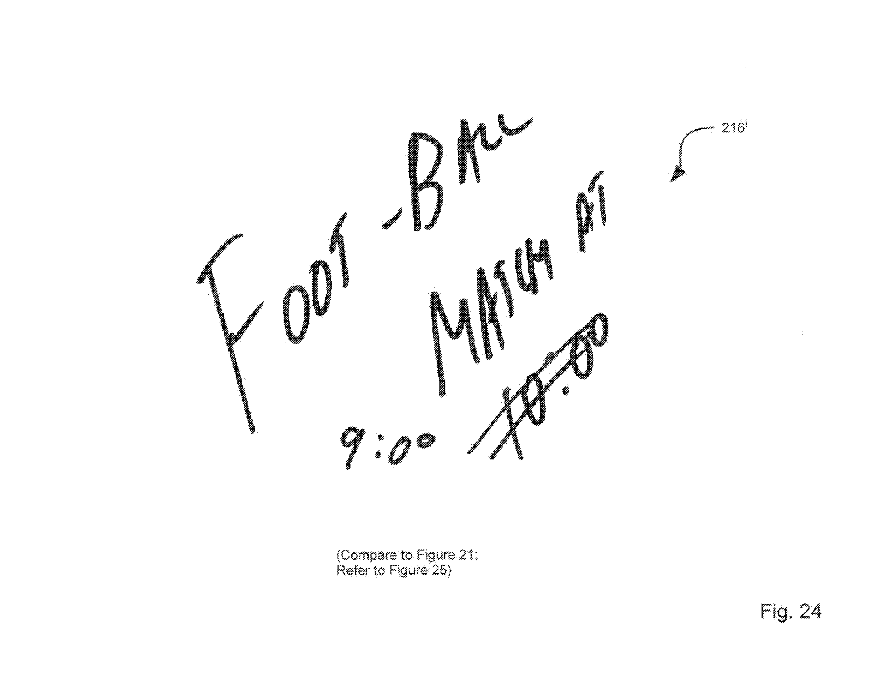

Figure 24 shows the handwritten text from Figure 20 having been marked up and changed.

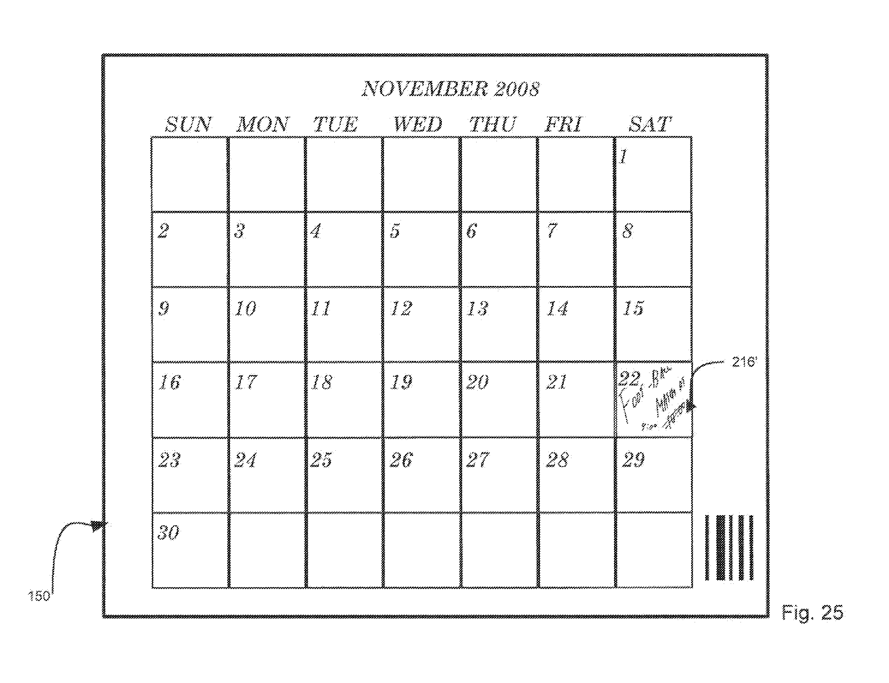

Figure 25 shows the view of Figure 20, but with the handwritten text from Figure 24.

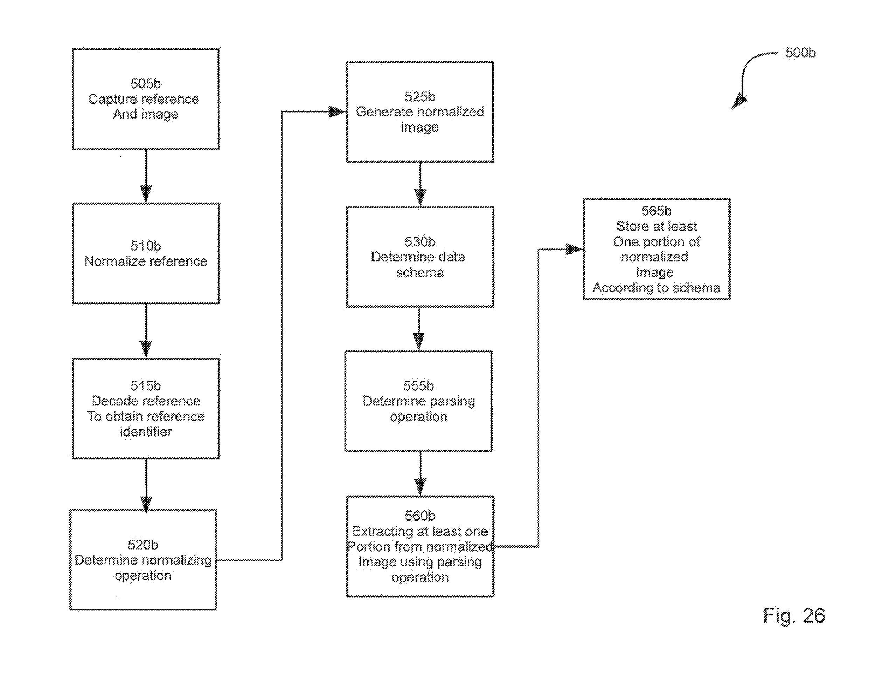

Figure 26 shows a flow chart depicting a method for image capture, processing and storage.

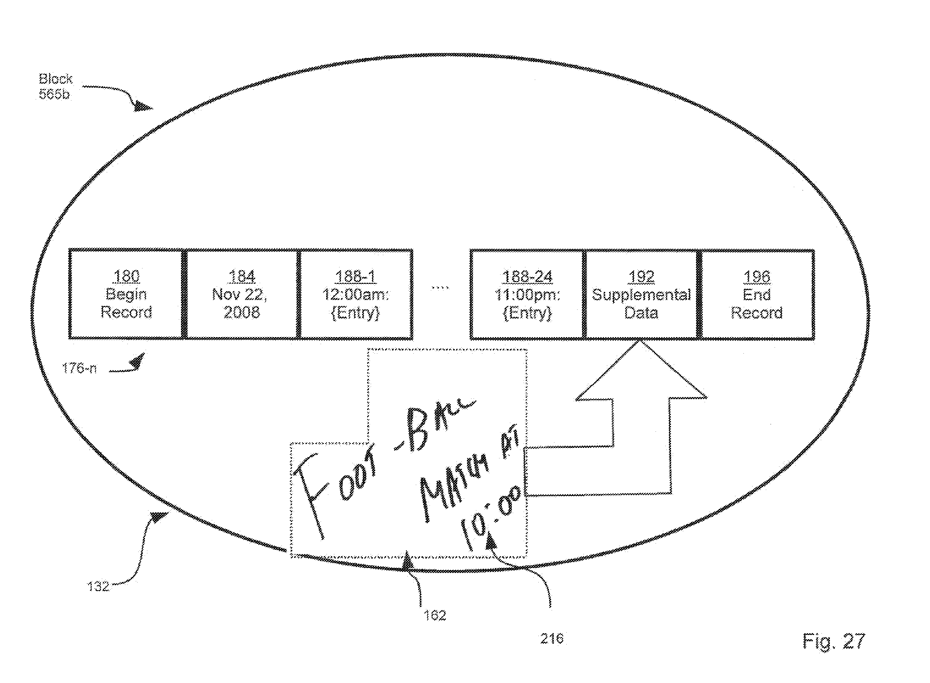

Figure 27 shows example performance of block 565b from the method of Figure 26.

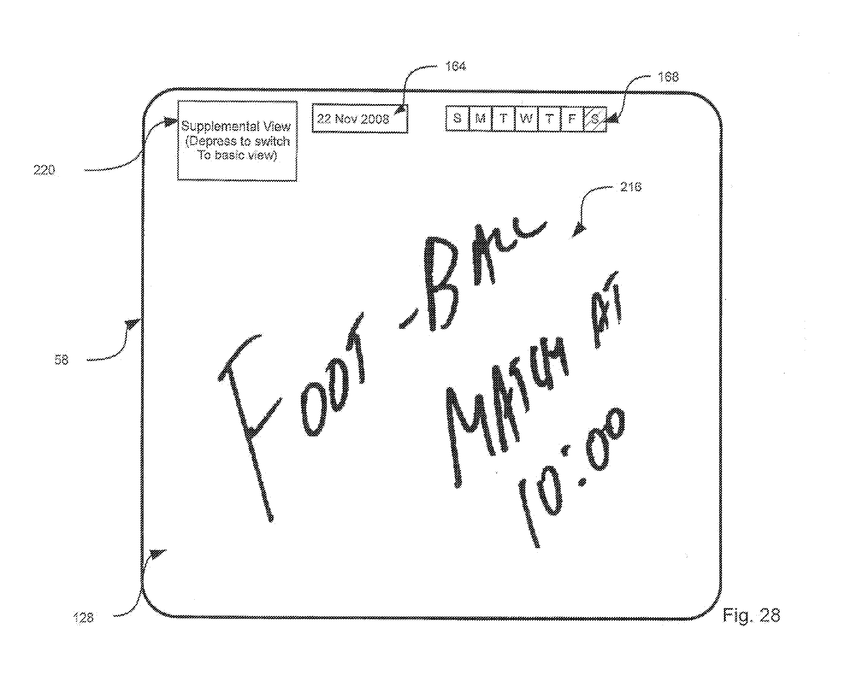

Figure 28 shows an example of the handwritten text of Figure 21 generated on the display of the device of Figure 3.

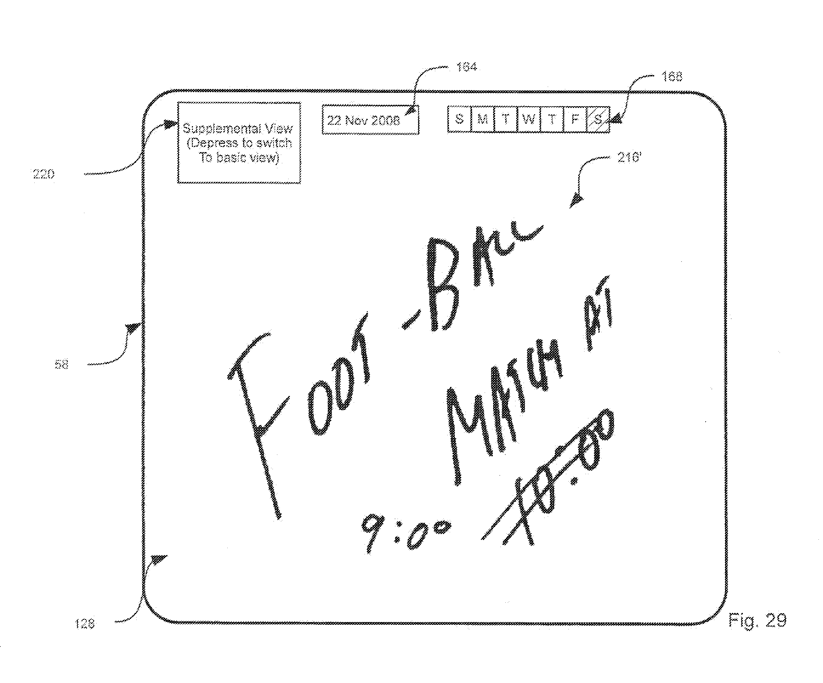

Figure 29 shows an example of the handwritten text of Figure 24 generated on the display of the device of Figure 3.

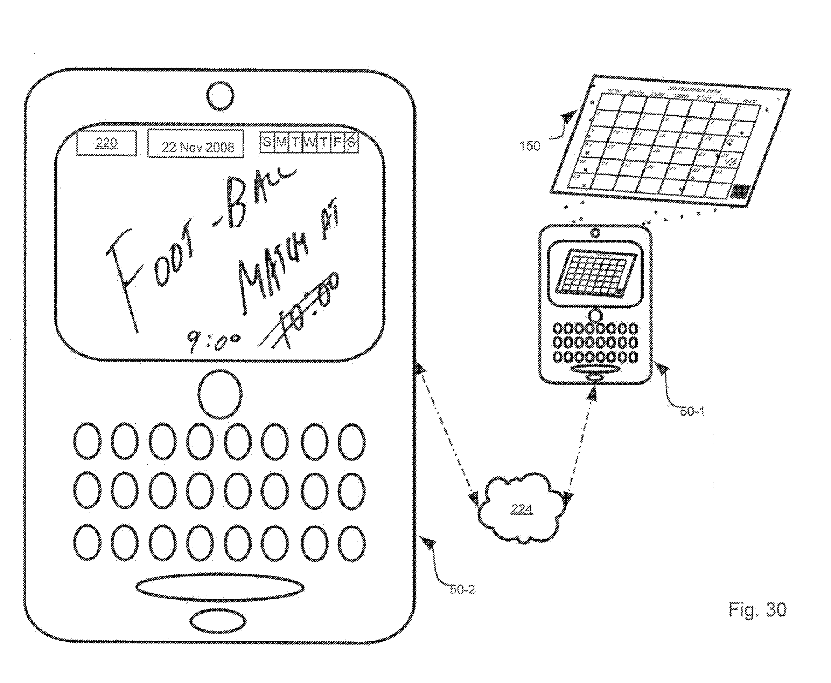

Figure 30 shows a plurality of the devices of Figure 1 in a networked configuration.

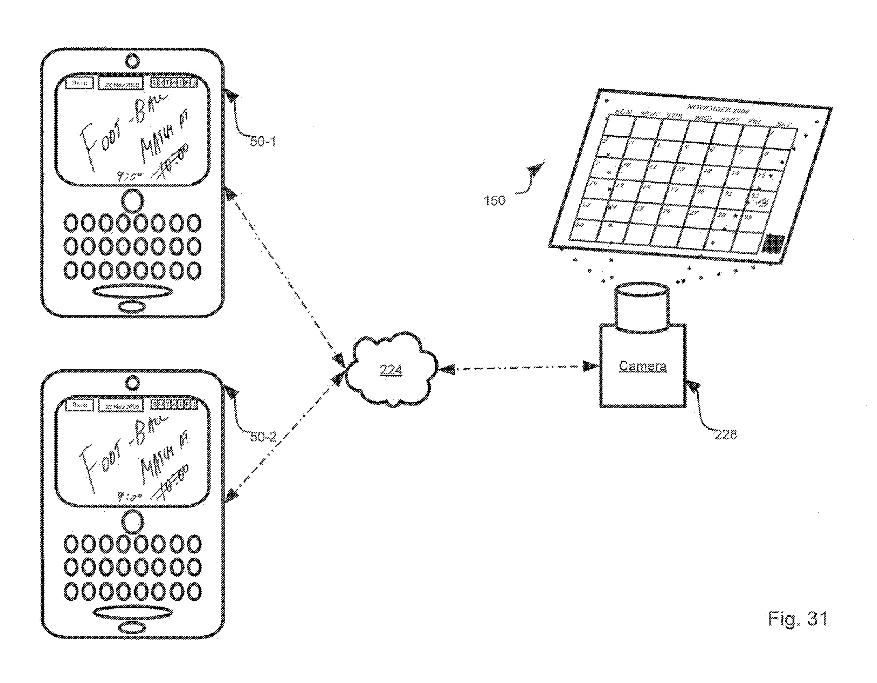

Figure 31 shows another network configuration of the devices of Figure 1 where the camera function is separate from the devices.

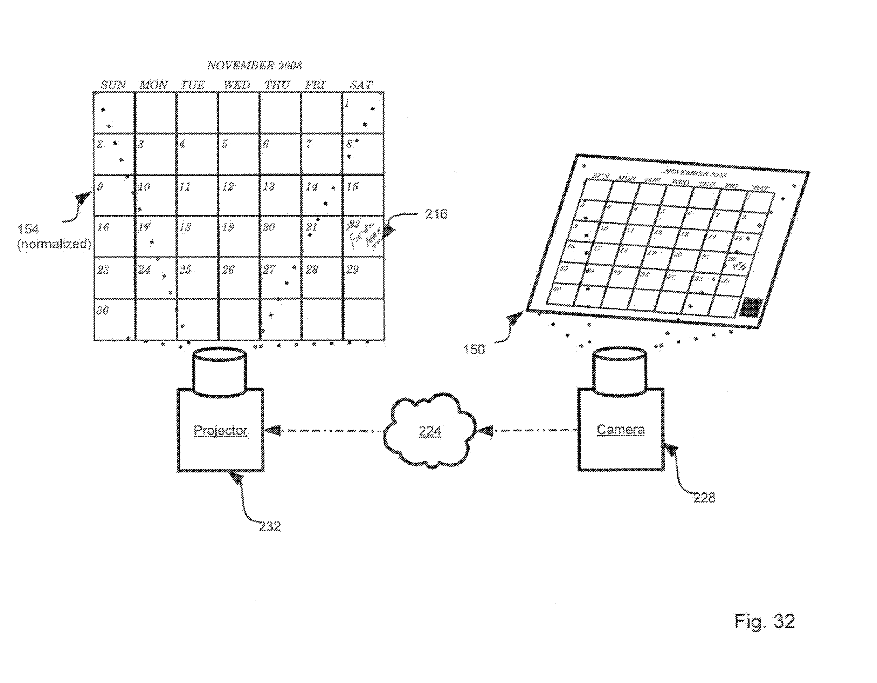

Figure 32 shows a variation on the embodiment of Figure 1, where a projector is used in place of displays on the devices.

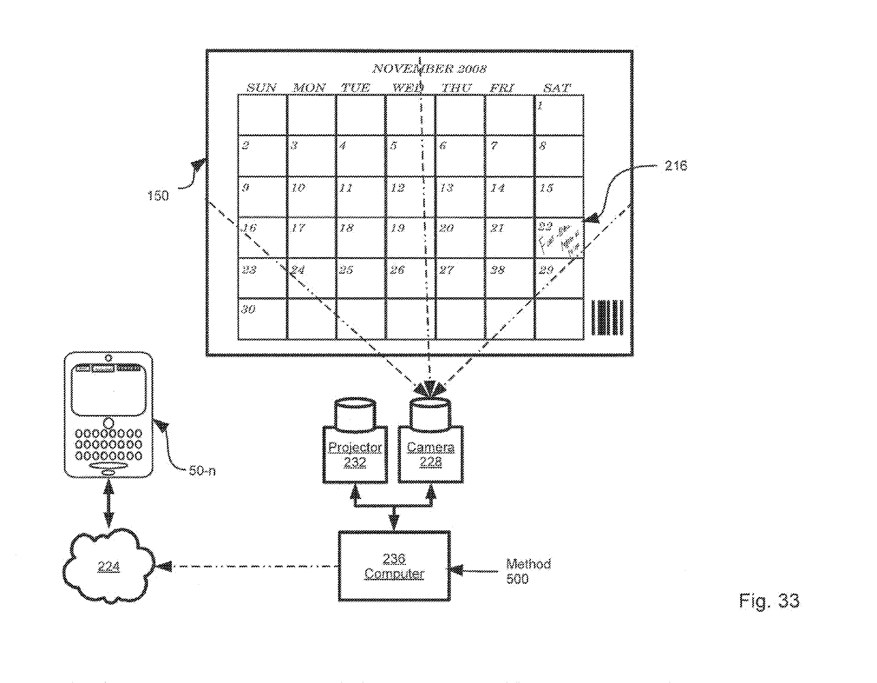

Figure 33 shows a variation on the embodiment of Figure 32 where the camera is capturing an image of the physical medium.

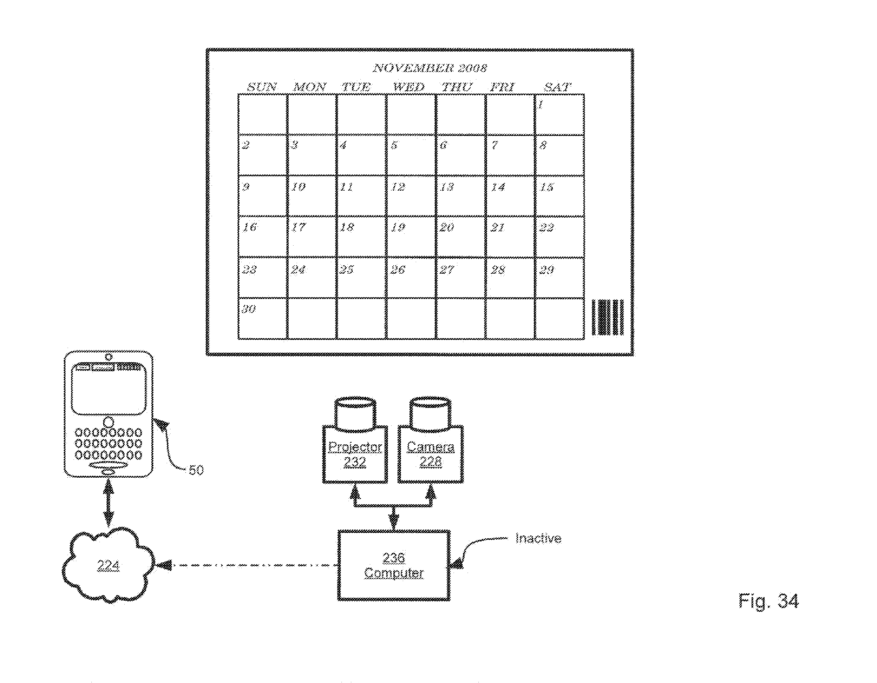

Figure 34 shows the embodiment of Figure 33 in an off state whereby the physical medium is being erased.

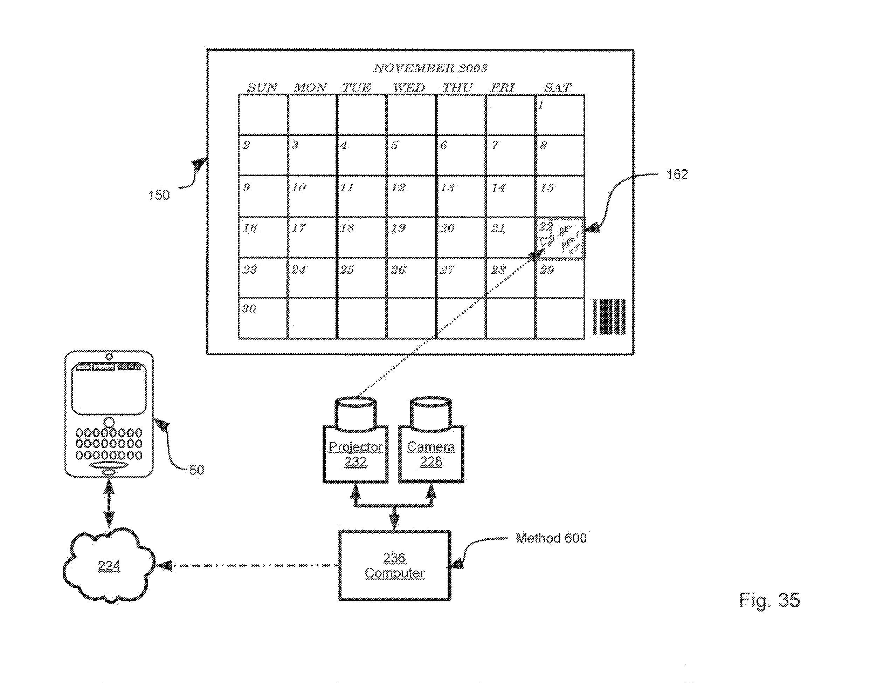

Figure 35 shows the embodiment of Figure 34 where an image of the data captured in Figure 33 is projected back on to the physical medium.

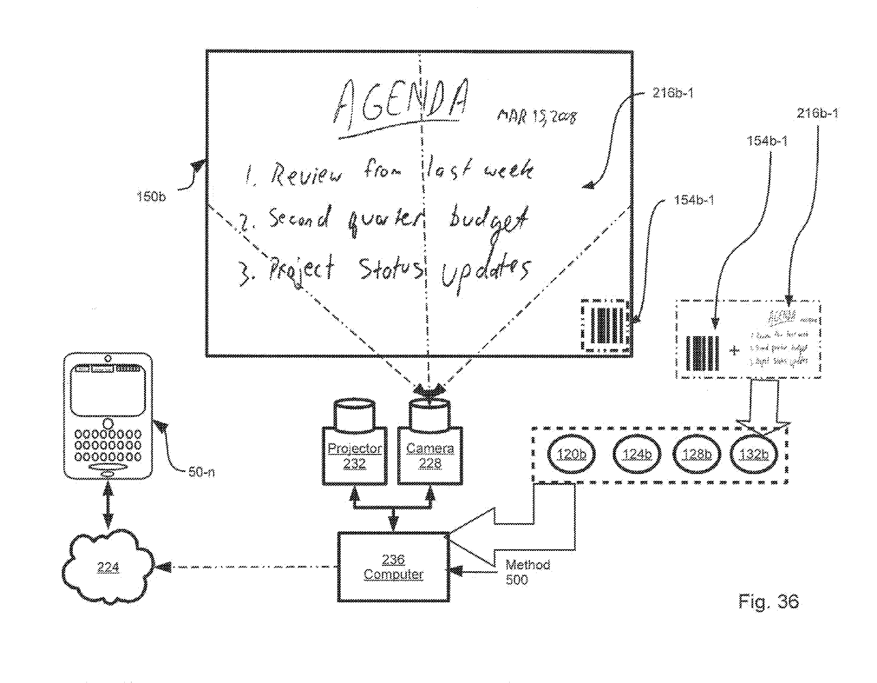

Figure 36 shows a variation on the embodiment of Figure 33 where a first image associated with a first reference is being captured.

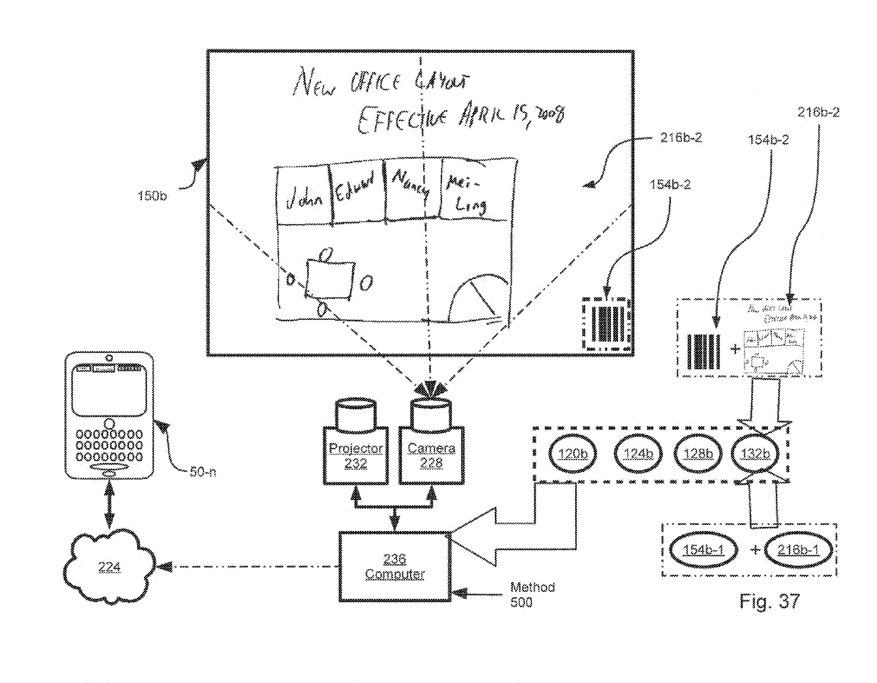

Figure 37 shows embodiment of Figure 36 where a second image associated with a second reference is being captured.

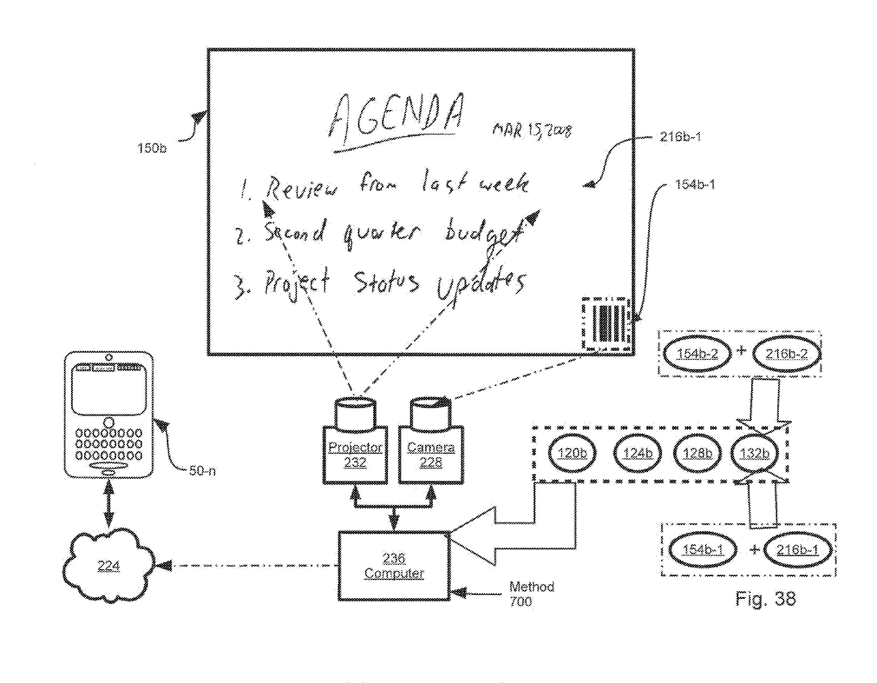

Figure 38 shows the embodiment of Figure 36 where the first image is projected back on to the physical medium in response to capturing of the first reference.

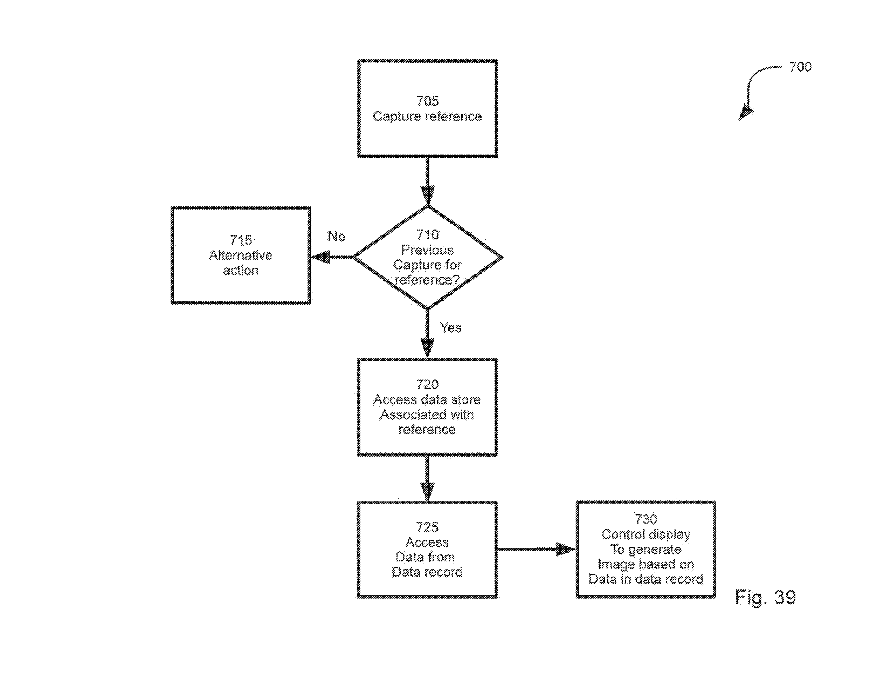

Figure 39 shows a method for image capture and generation in accordance with the embodiment of Figure 36, Figure 37 and Figure 38.

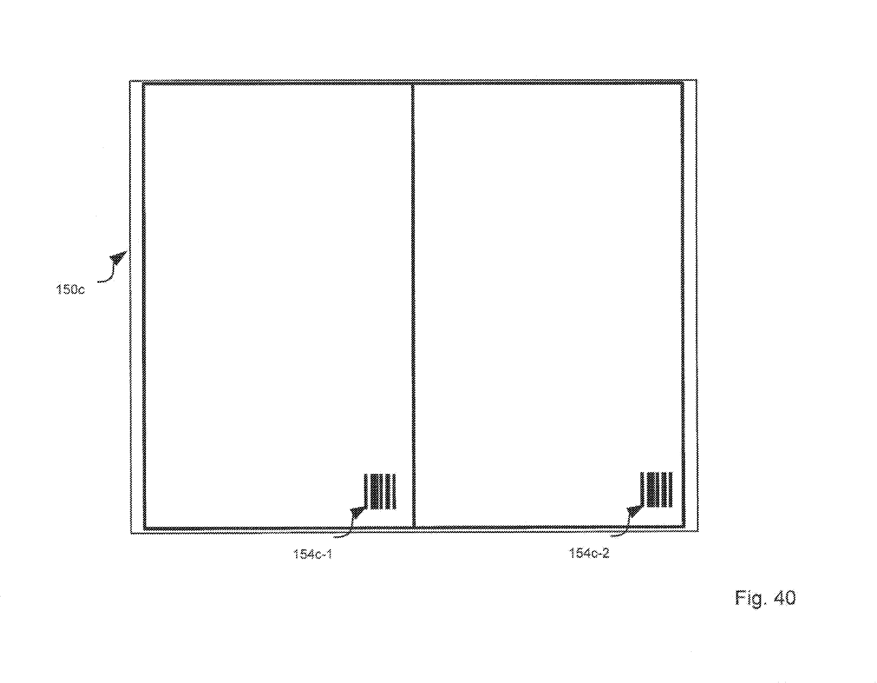

Figure 40 shows another physical medium and associated reference in accordance with another embodiment.

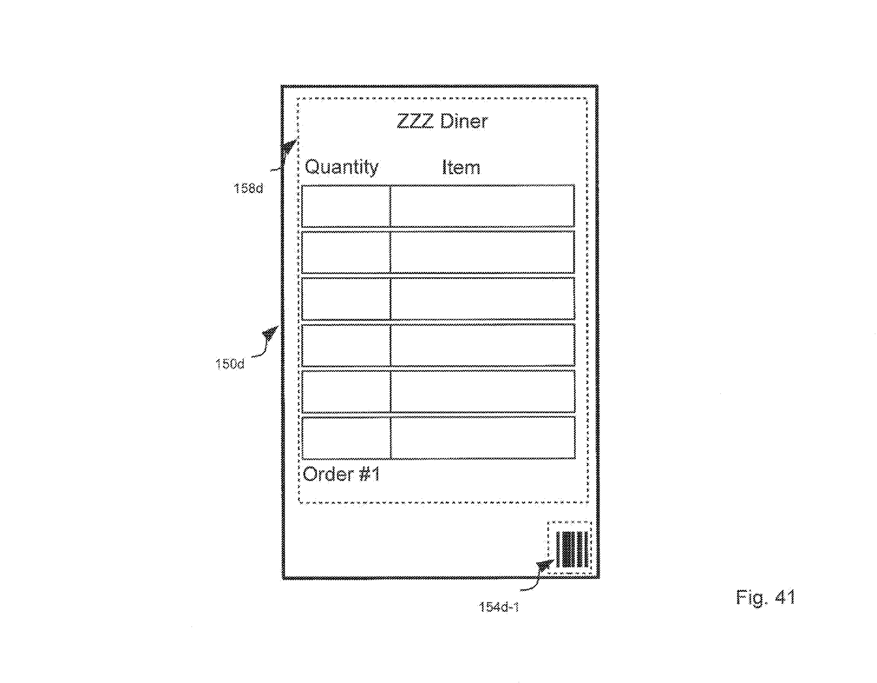

Figure 41 shows another physical medium and associated reference in accordance with another embodiment.

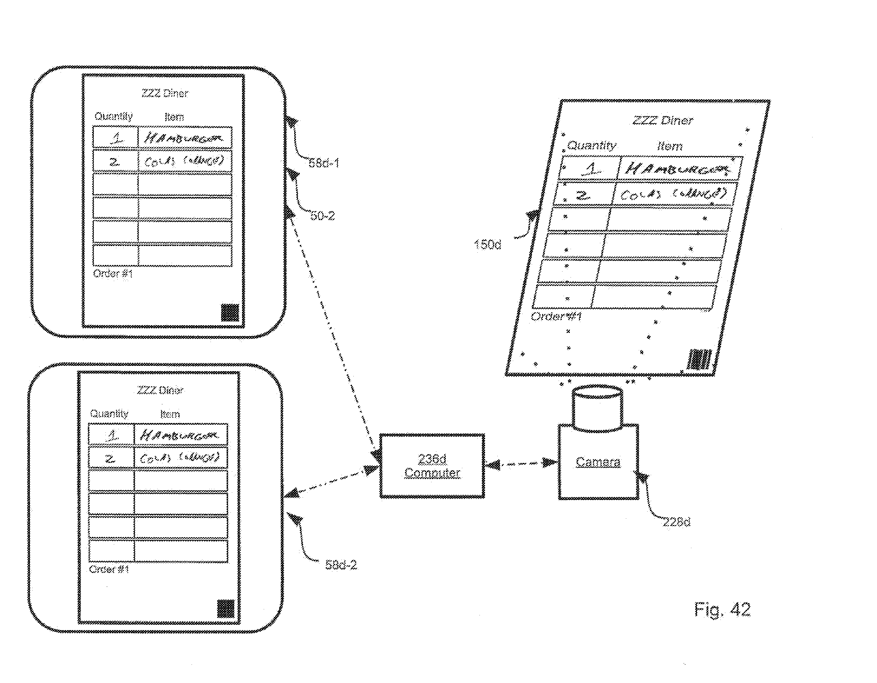

Figure 42 shows a system that varies on the device of Figure 3 that utilizes the physical medium of Figure 41.

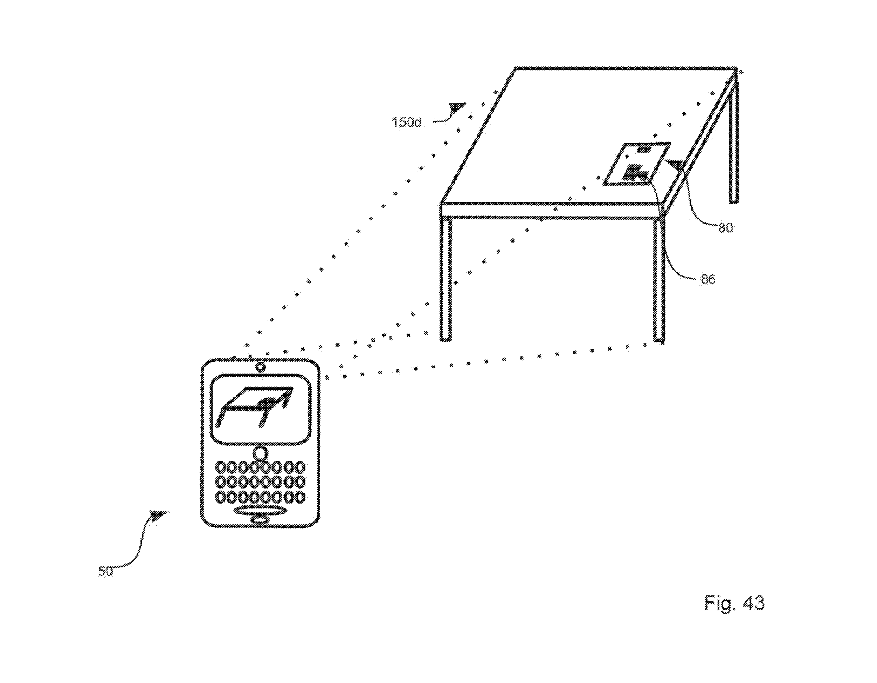

Figure 43 shows the device of Figure 1, Figure 2 and Figure 3 that utilizes a further physical medium.

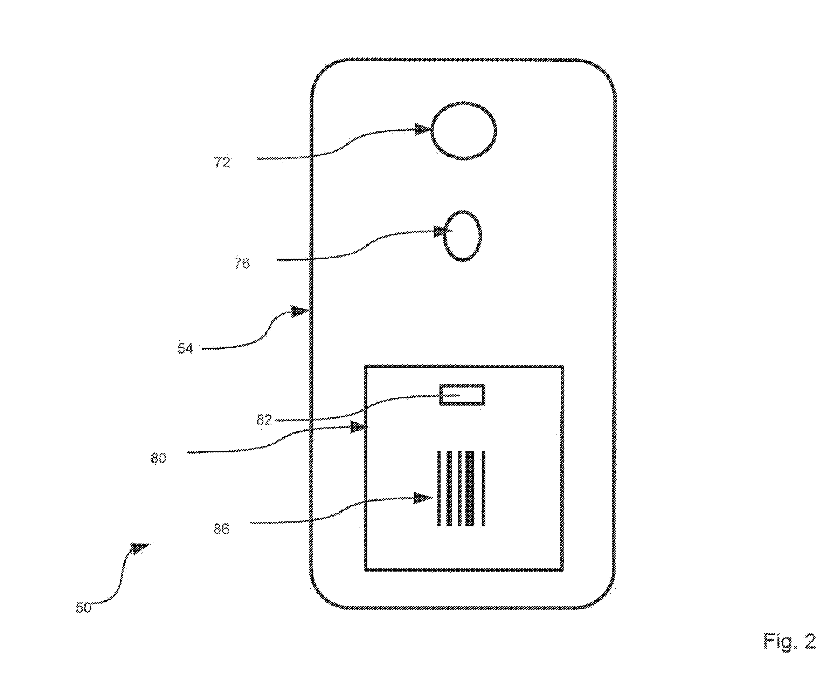

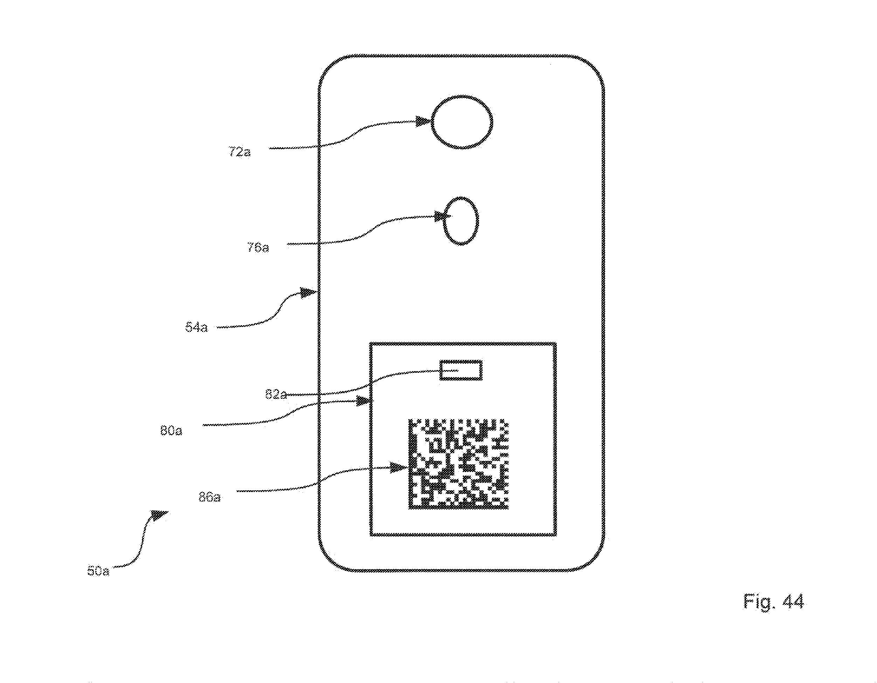

Figure 44 shows a variation on the rear view from Figure 2.

### DETAILED DESCRIPTION OF THE EMBODIMENTS

Referring now to Figure 1, shows a schematic representation of a non-limiting example of a portable electronic device 50 which can be used to capture, process and store images, as discussed in greater detail below. It is to be understood that portable electronic device 50 is an example, and it will be apparent to those skilled in the art that a variety of different portable electronic device structures are contemplated. Indeed variations on portable electronic device 50 can include, without limitation, a cellular telephone, a portable email paging device, a camera, a portable music player, a portable video player, a portable video game player. Other contemplated variations include devices which are not necessarily portable, such as desktop computers.

Referring to Figure 1, device 50 comprises a chassis 54 that supports a display 58. Display 58 can comprise one or more light emitters such as an array of light emitting diodes (LED), liquid crystals, plasma cells, or organic light emitting diodes (OLED). Other types of light emitters are contemplated. Chassis 54 also supports a keyboard 62. It is to be understood that this specification is not limited to any particular structure, spacing, pitch or shape of keyboard 62, and the depiction in Figure 1 is an example. For example, full or reduced "QWERTY" keyboards are contemplated. Other types of keyboards are contemplated. Device 50 also comprises a pointing device 64 which can be implemented as a touch-pad, joystick, trackball, track-wheel, or as a touch sensitive membrane on display 58. Device 50 also comprises a speaker 66 for generating audio output, and a microphone 70 for receiving audio input.

Referring to Figure 2, a rear view of device 50 is shown. In Figure 2, device 50 is also shown as comprising a flash 72 and an optical capture unit 76. It is to be understood that the term "optical" as used in relation to optical capture unit 76 is not directed to a lens structure or the like, but rather to refer to an array of charge couple devices (CCD) (or a functionally equivalent transducer structure) that is configured, in association with a lens structure, to receive an image in the form of electro-magnetic energy substantially within the visible spectrum, and to convert that energy into an electronic signal which can be further processed. Typically, the electronic signal is digitized for storage. The stored digitized image can be further processed and can be generated on display 58. Optical capture unit 76 that will be discussed in greater detail below. Flash 72 can activate to provide additional lighting to assist the capture of energy by optical capture 76. In general, it will now be understood that optical capture unit 76 can, if desired, be implemented, or based on, a digital camera function as commonly incorporated into portable electronic devices.

A battery compartment cover 80 is also shown in Figure 2, with a tab 82 that can be manipulated to unlock cover 80 from chassis 54 and so that cover 80 can be detached from chassis 54. An optical reference 86 is also applied to cover 80. In a present embodiment, optical reference 86 is a one dimensional bar code, but as will be discussed further below, other types of optical references are contemplated.

Figure 3 shows a schematic block diagram of the electronic components of device 50. It should be emphasized that the structure in Figure 3 is an example. Device 50 includes a plurality of input devices which in a present embodiment includes keyboard 62, pointing device 64, and microphone 68, in addition to optical capture unit 76. Other input devices are contemplated. Input from keyboard 62, pointing device 64 and microphone 68 and optical capture unit 76 is received at a processor 100. Processor 100 can be configured to execute different programming instructions that can be responsive to the input received via input devices. To fulfill its programming functions, processor 100 is also configured to communicate with a non-volatile storage unit 104 (e.g. Erase Electronic Programmable Read Only Memory ("EEPROM"), Flash Memory) and a volatile storage unit 108 (e.g. random access memory ("RAM")). Programming instructions that implement the functional teachings of device 50 as described herein are typically maintained, persistently, in non-volatile storage unit 104 and used by processor 100 which makes appropriate utilization of volatile storage 108 during the execution of such programming instructions.

Processor 100 in turn is also configured to display 58, control speaker 66 and flash 72, also in accordance with different programming instructions and optionally responsive to different input receive from the input devices.

Processor 100 also connects to a network interface 112, which can be implemented in a present embodiment as a radio configured to communicate over a wireless link, although in variants device 50 can also include a network interface for communicating over a wired link. Network interface 112 can thus be generalized as a further input/output device that can be utilized by processor 100 to fulfill various programming instructions. It will be understood that interface 112 is configured to correspond with the network architecture that defines such a link. Present, commonly employed network architectures for such a link include, but are not limited to, Global System for Mobile communication ("GSM"), General Packet Relay Service ("GPRS"), Enhanced Data Rates for GSM Evolution ("EDGE"), 3G, High Speed Packet Access ("HSPA"), Code Division Multiple Access ("CDMA"), Evolution-Data Optimized ("EVDO"), Institute of Electrical and Electronic Engineers (IEEE) standard 802.11, Bluetooth™ or any of their variants or successors. It is also contemplated each network interface 112 can include multiple radios to accommodate the different protocols that may be used to implement different types of links.

As will become apparent further below, device 50 can be implemented with different configurations that described, omitting certain input devices or including extra input devices, and likewise omitting certain output devices or including extra input devices. However, a common feature of any device 50 used to implement the teachings of this specification includes optical capture unit 76 and accompanying processing and storage structures.

In a present embodiment, device 54 is also configured to maintain, within non-volatile storage 104, a reference store 120, an image processing application 124, an executable application 128, and a data record store 132 for storing data records compatible with said executable application 128. As will be explained further below, any one or more of reference store 120, image processing application 124, executable application 128, and data record store 132 can be pre-stored in non-volatile storage 104 upon manufacture of device 50, or downloaded via network interface 112 and saved on non-volatile storage 104 at any time subsequent to manufacture of device 50.

Processor 100 configured to execute image processing application 124 and executable application 128, making use of reference store 120 and data record store 132 as needed. In one general aspect of this specification, as will be explained further below, processor 100 is configured, using image processing application 124, to optically capture a reference and an image via optical capture unit 76, and to match the reference with a stored reference maintained within reference store 120. Processor 100 is also configured to determine a normalizing operation using processing application 124, in order to normalize the reference based on a comparison between the reference and the stored reference. Processor 100 is also configured to generate a normalized image by applying the normalizing operation to the image, and decode the reference to obtain a reference identifier. Using the reference identifier, processor 100 can determine a data schema associated with the reference by the reference identifier. The data schema defines mapping data to data records, which can be stored in the data record store 132, and which are with executable application 128. Non-limiting, example implementations of this general aspect will be discussed in further detail below. Before discussing those implementations, however, certain physical medium will be described which can be used as the reference and image.

Referring now to Figure 4, a non-limiting example of such a physical medium, in accordance with an example embodiment, of this specification is indicated generally at 150. In Figure 5, physical medium 150 is a calendar for the month of November 2008. Physical medium 150 can be generated on paper, on a whiteboard, a painted sign, or any other media comprising a substrate and markings where visible light reflecting from the media results in the a perception of a visible image as represented in Figure 4.

As seen in Figure 5, physical medium 150 comprises markings in the form of a reference 154 and an image 158. Note the dashed lines in Figure 5 do not form part of the reference 154 and image 158 themselves, but are rather provided to show the boundaries of reference 154 and image 158.

In a present embodiment, reference 154 is a barcode, which can be encoded according to any public or proprietary standard, including linear bar code formats, or matrix bar code formats or any other functionally equivalent type of format. As will be discussed further below, reference 154 is uniquely associated with image 158. Reference 154 uniquely identifies image 158 and various characteristics about image 158. Table I provides an example of such characteristics.

**Table I**

| **Characteristics about image 158 associate with reference 154** | | |
|---|---|---|
| **Field** | **Field Name** | **Contents** |
| 1 | Identifier | 1234567 |
| 2 | Type | Calendar |
| 3 | Name | November 2008 |
| 4 | Month | November |
| 5 | Year | 2008 |
| 6 | First Day of Month | Saturday |
| 7 | Last Day of Month | Sunday |
| 8 | Number of Days in Month | 30 |
| 9 | Number of Rows | 6 |
| 10 | Bottom Left Corner of Calendar | Position X1,Y1 |
| 11 | Top Right Corner of Calendar | Position X2, Y2 |
| 12 | Size of each Day | W,H |
| 13 | Location of Day 1 | Position A1, B1 |
| 14 | Location of Day 2 | Position A2, B2 |
| ... | ... | ... |
| 42 | Location of Day 30 | Position A30, B30 (A30=X1,B30=Y1) |
| 43 | End of Table | Null |

Explaining Table l in further detail, Field 1 provides a unique identifier for image 158. It is contemplated therefore that an infinite number of physical media can be generated that includes different images and corresponding unique references that are associated with those images. Accordingly, Field 1 in this example is reserved for a unique identification of image 158 as shown in Figure 5. Field 2 identifies a type of image. It is contemplated therefore that there can also be an infinite number of types of images that can be included on a physical medium and which can be used according to the teachings of this specification. In this example, the Type is a calendar, but, as will be discussed below, other types are contemplated. It is also contemplated that, based on a detected type in Field 2, a remainder of fields can be identified that correspond to that type, so that image processing application 124 can process those remaining fields according to expected fields that correspond with that type. Field 3 provides a name for image 158, which in this case is "November 2008", corresponding to the calendar month and year of medium 150. Field 4 provides the Month name, November, while Field 5 provides the Year, 2008. Field 6 provides the first day of the Month, being a Saturday, while Field 7 provides the last day of the Month, being a Sunday. Field 8 provides the number of days in the month, being thirty. Field 9 provides the number of rows in the calendar being six.

Referring briefly to Figure 6, in conjunction with Table I, Field 10 provides coordinates for the bottom left coordinate of the calendar within image 158. Likewise, Field 11 provides coordinates for the top right coordinate of the calendar within image 158. Field 12 identifies a size for each day in the calendar, in the form of a width W and a height H. Width W is represented on Day 3 of the Calendar in Figure 6, while Height H is represented on Day 4 of the Calendar in Figure 6. Field 13 through Field 42 identifies the bottom-left coordinates for each day in the calendar, certain ones of which are labeled in Figure 6 using the same nomenclature as used in Table 1. Dimensions (e.g., width, height) and coordinates can be expressed as a measure of units (e.g., millimeters), which can be stored in a separate field or with the dimension and coordinate values themselves (e.g., "45 mm").

Also shown in Figure 6 is a space 162 for November 22, 2008, representing a location on physical medium 150 that does contain any markings. For convenience, only the space 162 is marked on Figure 6, but it is to be understood that space 162 also refers to the corresponding space for each day within November 22, 2008. When Table I is accessed by image processing application 124 in order to process a captured version of physical medium 150, and thereby derive the structure of image 158, processing application 124 is configured to ascertain blank spaces 162 for each day of the month. This aspect of image processing application 124 will be discussed in greater detail below.

The contents of Table I can be stored entirely within reference 154, so that all of Table I is derivable by decoding reference 154. Alternatively, reference 154 can be limited to storing only the identifier in Field 1, so that only the identifier Field 1 is derivable upon decoding reference 154. In this alternative, the remainder of Table I can be stored within reference store 120 within non-volatile storage 104, or dynamically downloadable to non-volatile storage 104, automatically after processor 100 receives reference 154 from optical capture unit 76 and decodes reference 154 to derive the identifier in Field 1.

More generally, it can be seen that Fields 1-5 of Table I provide different types of identifying characteristics about image 158, while the remaining fields in Table I provide locating information for parsing image 158 into, in this example, the different days of the month.

It can be noted that there is no express field for number of columns, (i.e. seven columns, one for each day of the week), since this can be defined implicitly for image processing application 124 for all images of type "Calendar". This omission of an express identification of the number of columns highlights the fact that other fields in Table I may also be omitted and defined implicitly as well. At this point it also bears repeating that all of Figure 4, Figure 5 and Table I reflect merely one, non-limiting example of a physical medium 150, reference 154, and image 158 and set characteristics that are illustrative of an implementation. An example variation is shown in Figure 7, which shows a physical medium 150a that is a variant on physical medium 150, and accordingly, like elements bear like references except followed by the suffix "a". While physical medium 150a is substantially the same as physical medium 150, it can be noted that physical medium 150a includes a plurality of references 154a-1, 154a-2, 154a-3, 154a-4, 154a-5. Reference 154a-1 is substantially the same as reference 154, however, references 154a-2, 154a-3, 154a-4, 154a-5 are additionally provided, in the form of cross-hairs. The existence of references 154a-2, 154a-3, 154a-4, 154a-5 can additionally be included in a modified version of Table I, to assist in the location of the corners of image 158a. Of particular note, reference 154a-4 can assist in interpretation of Field 10 of Table I, to provide an absolute reference that corresponds with the coordinates for the bottom left corner of the calendar, as identified in Field 10 of Table l. Likewise reference 154a-3 can assist in interpretation of Field 11 of Table I, to provide an absolute reference that corresponds with the coordinates for the top right corner of the calendar, as identified in Field 11 of Table 1. It can also be desired to include references within image 158a, to further assist in interpretation of the structure of image 158a. It can also be desired to utilize the markings of image 158a itself (e.g. the vertical and horizontal lines that are boundaries for each day, or the numbers within each day as references). Further variations on references 154, 154a-1, 154a-2, 154a-3, 154a-4, 154a-5 will now occur to those skilled in the art. For simplicity, however, further discussion will focus on substrate 150 rather than substrate 150a.

Referring now to Figure 8, a non-limiting example of executable application 128 is shown. In this example, executable application 128 is a day view from enhanced calendar application that includes base functionality of a calendar application, comprising a daily agenda section 160, a date section 164, and a weekly calendar bar 168. Daily agenda section 160 includes a plurality of locations corresponding to times of day, where specific events can be recorded. Date section 164 indicates the particular day, month and year that are currently being displayed in the daily agenda section 160. Weekly calendar bar 168 shows the days of the week, with a shading on the particular day of the week that corresponds to the day, month, and year in the date section 168. For ease of explanation, a particular view that can be generated by processor 100 on display 58 is shown in Figure 8, but it is to be understood that executable application 128 is more generally coded so that processor 100 can control display 58 so as to generate different calendar views according to different days, weeks or months. In other words, the specific daily agenda view in Figure 8, of November 22, 2008 between the hours of 9:00AM and 3:00PM is an example. Accordingly, in addition to the base calendar functions in Figure 8, other base functions can be included, including without limitation, an agenda view, a week view, and a month view (discussed further below). Furthermore, the various views that can be generated on display 58 by processor 100 can also be navigated by input received from keyboard 62 or pointing device 64 or both of them.

In addition to the base calendar functions as discussed above, executable application 128 also includes a supplemental function 172, which is represented as a soft-button bearing reference 172 in Figure 8. Supplemental function 172, according to the embodiment in Figure 8, can be selected using, for example, pointing device 64 to bring a cursor on display 58 (not shown) into focus over the button representing supplemental function 172 and to provide a "click" or other selection input representing an instruction to activate supplemental function 172. Again, the means by which supplemental function 172 is activated is not particularly limited, but this example serves as a useful illustration. Activating the supplemental function 172 can result in generation of an image of space 162 corresponding to the date November 22, 2008 from the image 158 of Figure 6, as will be discussed further below.

Referring now to Figure 9, there is shown a non-limiting example of data record store 132 that is compatible with the enhanced calendar executable application 128 example of Figure 8. Example data record store 132 comprises a plurality of records 176, although only a single record 176-n is shown. Other records 176, not shown, follow the same data schema or format as record 176-n. Record 176-n corresponds to November 22, 2008, and comprises a beginning record data field 180, which is a header that indicates that record 176-n is beginning. Record 176-n also comprises a date identifier data field 184, which includes the contents November 22, 2008, indicating the date and can be used to by application 128 to populate date section 164 as shown in Figure 8, when the date November 22, 2008 is selected. The day of the week that can be inferred from the content of date identifier data field 184 can be used to indicate the corresponding day of the week in weekly calendar bar 168.

Record 176-n also comprises a plurality of time agenda fields 188-1 ... 188-24, where the ellipsis represents the intervening records. (Collectively, agenda fields 188-1 ... 188-24 are referred to as agenda fields 188, and generically, as agenda field 188. This nomenclature used elsewhere herein.) Each agenda field 188 can be populated with an entry indicating specific events for that time period, and which would then appear in the appropriate location of daily agenda section 160 in Figure 8. It should be understood that agenda fields 188 need not be specific to any hour or specific time of the day, but can be configured to represent any span of time in the day. Accordingly, the number of agenda fields 188 can vary for each record 176, as per other calendar applications that include such base calendar functions.

Record 176 also comprises a supplemental data field 192, which contains data that is usable by supplemental function 172, which can be populated to include data representing an image of space 162 corresponding to November 22, 2008 from the image 158 of Figure 5, as will be explained further below. Finally, record 176-n includes an end record data field 196 indicating the end of data record 176-n.

Referring now to Figure 10, another non-limiting example of executable application 128a is shown. In this example, executable application 128a is a month view of enhanced calendar application that includes base functionality of a calendar application, comprising a month agenda section 200 and a month section 204. Month section 200 identifies the particular month and year that is being generated. Month section 204 shows the days of the month, with shading on the particular day of the month that corresponds to a day, month, and year that can be activated to switch to the daily view of Figure 8.

In addition to the base calendar functions as discussed above, executable application 128a also includes a supplemental function 172a, which is represented as a soft-button bearing reference 172a in Figure 10. Supplemental function 172a, according to the embodiment in Figure 10, can be selected by using, for example, pointing device 64 to bring a cursor (not shown) on display 58 into focus over the button representing supplemental function 172a and to provide a "click" or other selection input representing an instruction to activate supplemental function 172a. Again, the means by which supplemental function 172a is activated is not particularly limited, but this example serves as a useful illustration. Activating the supplemental function 172a can result in generation of the entirety of image 158 of Figure 5, as will be discussed further below.

Referring now to Figure 11, there is shown a non-limiting example of data record store 132a that is compatible with the enhanced calendar executable application 128a example of Figure 10. Example data record store 132a comprises a plurality of records 176a, although only a single record 176a-n is shown. Other records 176a, not shown, follow the same data schema or format as record 176a-n. Record 176a-n corresponds to November 2008, and comprises a beginning record data field 180a, which is a header that indicates that record 176an is beginning. Record 176a-n also comprises a date identifier data field 184, which includes the contents November 2008, indicating the month and can be used to by application 128 to populate month section 204 as shown in Figure 10, when the month of November 2008 is selected.

Record 176a-n also comprises a plurality of day agenda fields 188a-1 ... 188a-30, where the ellipsis represents the intervening records. Each day agenda field 188a can be populated with an entry indicating specific events for that time period, and which would then appear in the appropriate location of daily agenda section 160 in Figure 8. (Indeed, each agenda field 188a can be a pointer to corresponding data records 176 as discussed Figure 9).

Record 176a also comprises a supplemental data field 192a, which contains data that is usable by supplemental function 172a, which can be populated to include data representing an image corresponding to November 2008 from the image 158 of Figure 5, as will be explained further below. Finally, record 176a-n includes an end record data field 196 indicating the end of data record 176a-n.

Referring now to Figure 12, a flowchart depicting a method for image capture, processing and storage is indicated generally at 500. Method 500 is one way in which image processing application 124 can be implemented. It is also to be emphasized the method 500 can be varied and that method 500 need not be performed in the exact sequence as shown, hence the reference to "blocks" rather than "steps". To assist in discussion of method 500, a specific example to its performance will be discussed in relation to device 50, physical medium 150, Table I, executable application 128a, and data record store 132a.

Block 505 comprises capturing a reference and an image. Performance of block 505 is represented in Figure 13, whereby the camera function on device 50 is activated so as to cause processor 100 to receive a digital representation of physical medium 150 via optical capture unit 76. For illustration purposes, the digital representation of physical medium 150 is shown as generated on display, but this is not necessary. Also for illustration purposes, physical medium 150 is shown as having been captured whereby device 50 was oriented non-parallel to physical medium 150, leading to some skew and distortion. It is contemplated that in an ideal situation, device 50 is oriented parallel to physical medium 150 during block 505, but the teachings herein contemplate a non-ideal scenario, whereby the capture at block 505 can occur at an angle and a rotation in relation to physical medium 150, provided that the angle is still sufficient such that a reference 154 is captured in a manner that reference 154 can be decoded, as subsequently discussed. In any event, it can be noted that during block 505, both reference 154 and image 158 are captured, and in this example, such capture is achieved by a single digital photograph that contains both the reference 154 and the image 158.

Block 510 comprises normalizing the reference captured at block 505. As part of block 510, processor 100 parses the data representing physical medium 150 logically as shown in Figure 5, identifying portions of that data which correspond to reference 154 and to image 158. The normalizing function of block 510 can be implemented a variety of ways. For example, where reference 154 is a bar code, such as a linear bar code encoded using known means, then the normalizing of the reference can be performed using known means to normalize a bar code, as part of the known processes to decode bar codes.

As used herein, normalization refers to any one or more of deskewing, enlarging, shrinking, rotating, and color-adjusting and any other operation that results in generating a version of reference 154 that, as closely as possible, approximate the appearance of reference 154 when viewed at an angle normal to the plane defined by physical medium 150, and rotated in the orientation as shown in Figure 4. Block 510 is represented in Figure 14, wherein the captured reference 154 is shown as passing through processor 100 to result in a normalized version of reference 154.

Block 515 comprises decoding the reference captured at block 505 and normalized at block 510. Also as part of block 510, processor 100 examines reference 154 to derive a unique identifier from reference 154. Again, this can be implemented a variety of ways, but to the extent that reference 154 is a bar code, such a linear or 2D bar code, encoded using known means, then the extraction of the unique identifier can be performed also using such known means. Continuing with the specific example, as part of block 510 processor 100 can extract the identifier "1234567" from Field 1 of Table I in the process of decoding reference 154. Block 515 is represented in Figure 15, wherein the normalized reference 154 is shown as passing through processor 100 to derive the identifier "1234567".

Block 520 comprises determining a normalizing operation for normalizing the image captured at block 505, and block 525 comprises generating a normalized image using that operation. One example means for effecting block 520 is for processor 100 to record the normalization operation performed at block 510, and then to apply that same operation to the normalization of image 158. Other example means for effecting block 520 include the utilization of any cross-hairs or the like, such as references 154a shown in Figure 7. As part of this example, where the ideal coordinates of the cross-hairs are stored in the barcode, then the captured coordinates can be compared to the ideal coordinates to derive the normalizing function for the image. This is conceptually the same as just using the barcode, except that it would, for example, compensate for a localized bend at the barcode that may otherwise result in distortions to the normalizing function for the image. As another example, the various squares on the calendar as captured can be compared with each other, and a normalizing operation determined according to how the squares can be modified so they are of equal size and arranged in a grid according to rows which are normal to columns. (As a variation, it should also be understood that method 500 can be implemented whereby a normalizing operation can be determined for image 158 first, which is then used to normalize reference 154. This variation can apply when any calendar is expected. In another sense, however, the boundaries that define each square for each day in the calendar can be conceptually viewed as part of reference 154). Block 525 is represented in Figure 16, wherein the captured image 158 is shown as passing through processor 100 to result in a normalized version of image 158.

Block 530 comprises determining a data schema. Block 530 can be effected by using the reference identifier from block 515 in a look-up to locate a data schema that can be used to correspond with the reference identifier from block 515. Continuing with the specific example, the reference identifier from block 515, "1234567" can be included in a look-up table (not shown) which points to supplemental data field 192a within data store 132a in Figure 10. Also as part of block 530, all or part of Table I can be accessed in order derive "November" from Field 4 "Month" of Table I and to derived "2008" from Field 5 "Year" of Table I, and thereby specifically point to supplemental data field 192a within data record 176a-n which specifically corresponds to November 2008. As discussed above, Table I and the look-up table can be decoded directly from reference 150a, or Table I and the look-up table can be downloaded as needed via network interface 112, or Table I and the look-up table can be previously stored in non-volatile storage 104.

Block 535 comprises storing the normalized image from block 525 in a data record according to the schema from block 530. Block 535 is represented in Figure 17, as normalized image 158 is shown as being stored in supplemental data field 192a of record 176a-n within data record store 132a.

Referring now to Figure 18, a flowchart depicting a method for executing an application for accessing a stored image is indicated generally at 600. Method 600 is one way in which application 128a can be implemented. It is also to be emphasized the method 600 can be varied and that method 600 need not be performed in the exact sequence as shown, hence the reference to "blocks" rather than "steps". To assist in discussion of method 600, a specific example to its performance will be discussed in relation to device 50, physical medium 150, Table 1, executable application 128a, and data record store 132a, as data record store 132a has been populated according to Figure 17.

Block 605 comprises executing an application. In this specific example, application 128a is executed and, at block 605, the view in Figure 10 is generated on display 58. At block 610, a determination is made as to whether a supplemental function in application 128a has been activated. According the specific non-limiting example of Figure 10, a "yes" determination is reached if the "supplemental" button indicated at reference 172a, indicating an instruction to invoke supplemental function 172a, is selected. Otherwise a "no" determination is made at block 610 and method 600 cycles back to block 605, at which point application 128a continues to execute in its normal fashion according to its basic functions. A "yes" determination at block 610 leads to block 615, at which point data that is stored in a data store associated with the application is accessed. In the specific example discussed above, data record 176a-n within data record store 132a is accessed at block 615. Block 620 comprises accessing data from the data record accessed at block 615. Continuing with the specific example, normalized image 158 as stored in supplemental data field 192a is accessed and retrieved by processor 100. At block 625, the display is controlled to generate an image based on the data retrieved at block 620. Example performance of block 625 is shown in Figure 19, where normalized image 158, as retrieved from data record 176a-n, is shown generated on display 58. It is to be emphasized that Figure 19 shows an *image* of a calendar being a facsimile reproduction of image 158 from physical medium 150, whereas Figure 10 shows a *rendered* calendar that is generated by processor 100 using application 128a. In operation, the button 172a in Figure 10 can be selected to generate the view in Figure 19, while the button 212a in Figure 19 can be selected to return to the view in Figure 10.

It will now be apparent that method 500 can be repeated, in relation to application 128a, for different months and years and further populate data record store 132a. Alternatively, method 500 can be repeated for the same month (e.g. November 2008) and overwrite existing supplemental data fields 192a. This alternative is explained further by way of example in Figure 20, where physical medium 150 now has handwritten text 216 "Foot-ball match at 10:00" written inside the box corresponding to November 22, 2008. (Handwritten text 216 is reproduced in larger form in Figure 21 for further reference.) When the method 500 and, thereafter, method 600 are repeated using physical substrate 150 as it is shown in Figure 20, then application 128a will generate image 158 as it is shown in Figure 22.

Method 500a is shown in Figure 23, and is a variation on method 500 and accordingly like blocks bear like references, except followed by the suffix "a". Method 500a can be used where method 500 has been performed already, so that an image 158 has already been stored, and method 500a is performed thereafter on a physical substrate 150 having the same reference 154. Of note is that block 540a, block 545a and block 550a are provided in method 500a, but otherwise method 500a is the same as method 500. Block 540 comprises accessing an existing record store, and block 545a comprises comparing data in the existing record store and determining if there are any differences. If there are no differences between the recently captured and normalized image and the previously stored normalized image, then at block 550a the normalized image from block 525a is discarded. If there are differences found at block 545a, then at block 535a the normalized image from block 525a is stored, overwriting the previously stored image. Thus, if method 500 was first performed on the physical medium 150 in Figure 4, and then method 500a was performed on the same physical medium 150 from Figure 4, then a "no" determination is made at block 545a and method 500a would advance to block 550a where the recently captured and normalized image would be discarded. However, if method 500 was first performed on the physical medium 150 in Figure 4, and then method 500a was performed on the physical medium 150 from Figure 20, then a "yes" determination is made at block 545a and method 500a would advance to block 535a where the recently captured and normalized image would be used to overwrite the existing stored image.

It should be noted that computer processing methods for effecting block 545a can vary in complexity in order to reduce the likelihood of "false positives", whereby a "yes" determination at block 545a is erroneously made due to, for example, time-varying lighting conditions, smudges on the camera lens, or irrelevant marks on the calendar. Accordingly, such computer processing methods may be configured to examine for more writing, per se, even if no OCR operations are performed, or some predefined contrast threshold, so simple shadows and such don't trigger a 'yes' determination at block 545a.

Instances where method 500a can be utilize are further emphasized in the example shown in Figure 24 and Figure 25, which show handwritten text 216'. Figure 24 shows an enlarged version of the handwritten text 216' that is shown within the date November 22, 2008 on physical substrate 150 in Figure 25. Figure 24 can be compared with Figure 21, and such a comparison reveals that the time "10:00" from handwritten text 216 has been struck through, and the time "9:00" is substituted therefor. Thus, if method 500a is performed first in the context of handwritten text 216 on physical substrate 150, as previously described, and then again in the context of handwritten text 216' on physical substrate 150, then the image normalized from Figure 24 would be stored and override the image normalized from Figure 20.

At this point it can be noted that one of the advantages of the present specification that there is no need to even try to perform OCR on either handwritten text 216 or handwritten text 216'. Advantageously, avoiding OCR eliminates the chance of character-recognition type errors occurring as well as reduces processing demand. Instead, processing resources of processor 100 are conserved as only a resulting image is stored, and only comparisons between changing images need be made. A still further advantage is that a traditional handwritten calendar, such as a communal paper calendar or a communal whiteboard calendar, can be used in conjunction with an electronic device. Periodic performance of method 500 on that handwritten calendar can result in local copies of that handwritten calendar being easily stored, and updated, and accessed on the electronic device. Frequent handwritten updates can be made to the handwritten calendar, by different individuals, and still such changes are tracked and stored.

It is to be emphasized that the teachings herein can be employed with many different types of executable applications 128 and related data record stores 132. Indeed, specific examples have been discussed in relation to a month view of an executable calendar application 128a, but the teachings herein are further applicable to the day view of executable calendar application 128 shown in Figure 8, using method 500b as shown in Figure 26. Again, method 500b can be used to implement image processing application 124.

Method 500b is a variation of method 500, and accordingly, like blocks bear like references except followed by the suffix "b". Block 505b through block 530b are performed in substantially the same manner as block 505 through block 530 in method 500. However in method 500b, block 555b, block 560b and block 565b do not have equivalent blocks in method 500. At block 555b a parsing operation is determined that can be used to parse the normalized image from block 525b. Block 560b comprises actually extracting at least one portion of the normalized image from block 525b, using the parsing operation determined at block 555b. In the specific, non-limiting example discussed above, a parsing operation can be derived from Table I, as Field 6 through Field 42 include reference information that can be used by processor to locate and extract individual portions of image 150. Expressed in other words, more specific to the example shown in Figure 6, a sub-image for each space 162 for each day of the month can be extracted from image 150. At block 565b, the at least one portion extracted at block 560b are stored in appropriate data records according to the schema determined at block 530b. Block 565b is represented in Figure 27, as an extracted portion of normalized image 158 (i.e. space 162 corresponding to November 22, 2008 that contains handwritten text 216) is shown as being stored in supplemental data field 192 of record 176-n within data record store 132. In this same fashion, the other extracted portions of normalized image 158 (i.e. spaces 162 corresponding to the other days of the month of November 2008, and their contents) are stored in the supplemental data fields 192 of corresponding records 176 within data record store 132.

Then, using method 600 (from Figure 18) in conjunction with the day view of executable calendar application 128 shown in Figure 8, contents of each individual space 162 can be displayed, as shown in Figure 28, for a corresponding individual day, by activating the supplemental function 172 using the soft-button indicated at reference 172 in Figure 8. Activating the button labeled at 220 in Figure 28 toggles the view generated on display 58 back to the view on Figure 8. (In variations, other comparative views can be effected by, for example, showing each view side-by-side on the same screen, or overlaying a semi-transparent version of the image. Other variations of views are contemplated.) Furthermore, performance of a combined version of method 500a and method 500b, after physical medium 150 is marked up with the change shown in Figure 24 (i.e. the time "10:00" from handwritten text 216 has been struck through, and the time "9:00" is substituted therefor resulting in handwritten text 216'), results in the overwriting of supplemental data field of record 176-n with handwritten text 216'. Subsequent performance of method 600 then results in generation of the view shown in Figure 29, whereby handwritten text 216' is shown in place of handwritten text 216. (While not shown in the Figures, it is also contemplated that an asterisk or other indicium could be generated on display 58 in any application on device 50 that represents the fact that a change from handwritten text 216' to handwritten text 216 has occurred. Such an indicium may be selectable in order to directly invoke the view in Figure 29. Of course such an indicium can be generated for other changes that occur in other handwritten text as well.)

It should now be understood that each day displayable by executable calendar application 128 can have its own supplemental view of the type shown in Figure 28 or Figure 29, based on its own corresponding extracted portion of physical medium 150. Furthermore, performance of method 500a (suitably modified to include the functionality of method 500b) can result in only updates to those supplemental data fields 192 for corresponding days of the month where changes have occurred between successive optical capturing of physical medium 150.

In a further variation, it is contemplated that the foregoing supplementary features can be integrated into networked versions of executable applications. Another, non-limiting example of a networked version of executable application 128 is shown in Figure 30. In Figure 30, a first device 50-1 and a second device 50-2. Each device 50 need not be identical, but nonetheless include certain computing capabilities consistent with the general structure shown in Figure 3. In this example, first device 50-1 has structure permitting it to function substantially as described above in relation to method 500, method 500a, method 500b or method 600. In addition, first device 50-1 is configured to share at least the contents of supplemental data field 192 or supplemental data field 192a or both, across any plurality of records 172 or records 172a, over a network 224. Network 224 is accessed by network interface 112 of first device 50-1. Second device 50-2 is configured to accept such sharing, and to provide supplemental views of the type shown in Figure 22, Figure 28, or Figure 29. Expressed another way, device 50-1 is configured to perform at least method 500, method 500a or method 500b, while device 50-2 is configured to perform at least method 600.

A variation shown of the embodiment in Figure 30 is shown in Figure 31. In Figure 31, a camera 228 connects to network 225, and distributes results of method 500, (or method 500a, or method 500b or variants or combinations of them) via network 225 to a plurality of devices 50. Where physical medium 150 is an erase-able whiteboard or other calendar that that is fixed to a wall, or the like, then camera 228 can likewise be fixed. Furthermore, camera 228 can incorporate computing functionality so that it can perform all or any portion of, the blocks in method 500, or method 500a, or method 500b. It will now be understood that different blocks of method 500, or method 500a, or method 500b can be performed across different computing devices.

A further variation of the embodiment in Figure 30 is shown in Figure 32. In Figure 32, a projector 232 substitutes for device 50 and normalized image 154 is projected on a wall. A plurality of projectors 232 can also be provided.

A variation of the embodiment in Figure 32 is shown in Figure 33, Figure 34 and Figure 35, which shows a camera 228 and a projector 232 both within a field of view of physical medium 150 which is implemented as a whiteboard or the like. The camera 228 and projector 232 are connected by a computer 236. The camera 228 In Figure 32, camera 228 is analogous to the optical capture 76, the projector 232 is analogous to display 58, and the remaining components of Figure 3 are housed within computer 236. Computer 236 is optionally connected to network 224 so data can be shared with device 50-n according to the previously-described embodiments. In Figure 33, method 500 is invoked and camera 228 performs method 500 and captures physical medium 150, including handwritten text 216. In Figure 34, computer 236 is inactive, and handwritten text 216 is erased from physical medium 150. In Figure 35, computer 236 is active and performs method 600, and handwritten text 216 is projected onto physical medium 150 by projector 232. In this manner, historical captures of handwritten text on physical medium 150 can be restored via projection. Furthermore, projections of individual days from historical captures of physical medium 150 can be projected. Likewise, projections of entire images 154 (i.e. an entire month) from historic captures of physical medium 150 can be projected.

Different types of physical medium 150 are contemplated and different versions of references 154 are contemplated. Furthermore, such varied references 154 also include different schemas for data storage and associated executable applications. For example, an embodiment illustrating the use of a physical medium 150b in the form of a simple whiteboard is shown in Figure 36, Figure 37 and Figure 38. In Figure 36, reference 154b-1 is included on physical medium 150b. However, reference 154b-1 is provided as a sticker or other removable format, so that reference 154b-1 can be removed and replaced with another reference 154b. Also in Figure 36, a set of handwritten text 216b-1 has been written on physical medium 150b. When method 500 is invoked in Figure 36, data record store 132b creates a unique record that associates handwritten text 216b-1 with reference 154b-1. Next, in Figure 37, handwritten text 216b-1 has been removed from physical medium 150b and has been replaced with handwritten text 216b-2. Furthermore, reference 154b-1 has been replaced with new reference 154b-2. When method 500 is invoked in Figure 37, data record store 132b creates a unique record that associates handwritten text 216b-2 with reference 154b-2. However, also note that in Figure 37, handwritten text 216b-1 and reference 154b-1 remain stored within data record store 132b. Next, in Figure 38, handwritten text 216b-2 has been removed from physical medium 150b and is left blank, but reference 154b-2 has been removed and reference 154b-1 has been returned to physical medium 150b. In Figure 38, method 700 is invoked by computer 236. A flowchart representing method 700 is shown in Figure 39. According to method 700, block 705 comprises capturing a reference. In the example of Figure 38, reference 154b-1 is captured at block 705. Block 710 comprises determining if a previous image capture has been done in association with the reference captured at block 705. A "no" determination leads to alternative action at block 715 ― which could include, for example, invoking method 500 or a variant thereon. A "yes" determination at block 710 leads to block 720, which comprises accessing a data store associated with the reference captured at block 705. Block 725 comprises accessing data from the data record respective to the store accessed at block 720. Block 730 comprises controlling the display or projector in order to generate an image based on data in the data record referenced at block 725. Block 720, block 725 and block 730 are represented in Figure 38, as handwritten text 216b-1 is loaded from store 132b and projected onto physical medium 150b by projector 232. It will now be understood that handwritten text 216b-2 can also be projected back on to physical medium 150b, simply by putting reference 154b-2 back onto physical medium 150b and invoking method 700. Method 500 can also be rerun, at this point, to capture any further changes.

A further example of a physical medium 150c is shown in Figure 40, which comprises a standard notebook that is equipped with a unique reference 154c for each page of the notebook. If Figure 4, the notebook of physical medium 150c is opened to the first two pages of the notebook, and thus a first unique reference 154c-1 is provided for the first page, and a second unique reference 154c-2 is provided for the second page. A corresponding reference store (not shown), image processing application (not shown), executable application (not shown), and data record store (not shown) can be configured for device 50, and its variants to permit performance of method 500, and its variants, and method 600 and its variants in relation to physical medium 150c.

A further example of a physical medium 150d is shown in Figure 41, which comprises an order pad for use in a restaurant, and each page is comprises a unique reference 154c. In Figure 41, only the top page of the order pad is shown. The order pad physical medium 150d comprises an image 158d having a first column for quantity of items order, and a column indicating the actual item being ordered. A corresponding reference store (not shown), image processing application (not shown), executable application (not shown), and data record store (not shown) can be configured for device 50, and its variants to permit performance of method 500, and its variants, and method 600 and its variants in relation to physical medium 150c. Likewise suitable version of Table I can be created to reflect the image portion of physical medium 150c, comprising identifying characteristics about image 158d, while the remaining fields in Table I provide locating information for parsing image 158d into, in this example, quantities and items being ordered.

Figure 42 shows an example environment where physical medium 150d can be utilized. In Figure 42, computer 236d is a server that has a computing environment functionally equivalent to at least the processor 100, non-volatile storage 104, volatile storage 108, and network interface 112 of device 50. Camera 228d is functionally equivalent to optical capture 76 of device 50. A plurality of displays 58d connect to computer 236d. Displays 58d are functionally equivalent to display 58. Camera 228d can be fixed or movable. For example, camera 228d can be fixed over a table in the restaurant so that the physical medium 150d that carries the order can be captured by the camera 228d. In this example, a plurality of cameras 228d may be employed throughout the restaurant, one for each table. Alternatively, camera 228d can be incorporated into a portable electronic device such as portable electronic device 50, and the image and reference on physical 150d can be captured and then sent to computer 236d for further processing. Alternatively, camera 228d can be located in the restaurant at a central location, near the cash or kitchen. Then a plurality of orders, as they are received, can be captured via camera 228d. Display 58d-1 can be positioned in a kitchen area, so that cook staff can read the order, while display 58d-2 can be positioned in a cash-register area so that a bill can be processed by a cashier who reads the content of display 58d-2 and enters the data into a cash-register. An executable application associated with physical medium 150d can be devised which tracks the timing of receipt of various orders, so that, for example, a timer could be placed on displays 58d that indicate an amount of time that has elapsed since the order was captured by camera 228d. Other variants and enhancements to such an executable application will now occur to those skilled in the art.

A further example of a physical medium 150e is shown in Figure 43, which comprises an article, in the form of a table. In this example the reference is provided by optical reference 86 that was applied to the battery cover 80 of device 50. In Figure 43, battery cover 80 has been removed and placed on the table. The table and optical reference 86 together form the physical medium 150e. Method 500 can be performed on table and optical reference 86. In this embodiment, one executable application that can be invoked after method 500 is performed is contemplated to be an application that performs edge-detection to ascertain the outline of the table in relation to its surroundings, and then to calculate any one or more of the table's length, width and height. Such calculations being made possible because the dimensions of the reference 86 are known. Furthermore, as with the previous embodiments, the identifier within the reference 86 automatically indicates to device 50 which data store is to be used, and how the image is to be processed. In this embodiment, it also is contemplated that a plurality of image captures of physical medium 150d may be taken, from different angles, but all including the table and the reference 86, in order to provide multiple points of reference in order to do the dimensional calculation. This embodiment is contemplated to be useful so that portable electronic device 50 can be moved to a location where an article exists, and then to be able to remove battery cover 80 in order to provide a reference to be included for capture, such that once the reference is placed in a field of view with the article, the combined reference and article form a physical substrate.

A still further variation is shown in Figure 44, where a rear view of device 50 is shown, except that optical reference 86a is used in place of optical reference 86. Optical reference 86a is a two-dimensional bar code, used in place of a linear or one-dimensional bar code. It should now be understood that other types of optical references are contemplated, in addition to one-dimensional bar codes and two-dimensional bar codes. Also, different types of one-dimensional bar codes are contemplated, including, without limitation, U.P.C., Codabar, Code 25 ― Non-interleaved 2 of 5 Code 25 ― Interleaved 2 of 5, Code 39, Code 93, Code 128, Code 128A, Code 128B, Code 128C, Code 11, CPC Binary Discrete Two Post office, DUN 14, EAN 2, EAN 5, EAN 8, EAN 13, GS1 DataBar, HIBC (HIBCC Bar Code Standard), ITF-14 and others. Also, different types of two-dimensional bar codes are contemplated, including, without limitation, 3-DI Developed by Lynn Ltd., ArrayTag From ArrayTech Systems, Aztec Code, Chromatic Alphabet an artistic proposal by C. C. Elian which divides the visible spectrum into 26 different wavelengths, Chromocode, Codablock Stacked 1 D barcodes, Code 1, Code 49, Stacked 1D barcodes from Intermec Corp., ColorCode, Datamatrix From RVSI Acuity CiMatrix/Siemens. Public domain. Increasingly used throughout the United States, Datastrip Code From Datastrip, Inc., Dot Code A Designed for the unique identification of items., EZcode Designed for decoding by cameraphones, Grid Matrix Code From Syscan Group, Inc., High Capacity Color Barcode Developed by Microsoft; licensed by ISAN-IA, HueCode From Robot Design Associates, INTACTA.CODE From INTACTA Technologies, Inc., InterCode From Iconlab, Inc., MaxiCode, mCode, MiniCode From Omniplanar, Inc., and others.

While the foregoing provides certain non-limiting example embodiments, it should be understood that combinations, subsets, and variations of the foregoing are contemplated. The monopoly sought is defined by the claims.

## Claims

1. A method for image data capture and storage by an electronic device, the method comprising:
optically capturing a reference and an image;
matching said reference with a stored reference;
determining a normalizing operation to normalize said reference based on a comparison between said reference and said stored reference;
generating a normalized image by applying said normalizing operation to said image;
decoding said reference to obtain a reference identifier;
determining a data schema associated with said reference by said reference identifier,
said data schema for mapping data to data records compatible with an executable application; and
storing at least a portion of said normalized image as image data associated with at least one of said data records according to said data schema.

2. The method of claim 1 further comprising:
determining a parsing operation associated with said reference;
extracting said at least one portion of said normalized image according to said parsing operation; and
storing said at least one extracted portion as image data associated with said data record.

3. The method of claim 2 wherein said parsing operation is encoded within said reference and wherein determining said parsing operation is by decoding said reference.

4. The method of claim 2 or claim 3 wherein said image is an image of a calendar spanning a time period and said reference identifies said calendar and said time period and wherein said reference or said stored reference identifies a plurality of sub-time periods within said time period and wherein said at least one extracted portion comprises a plurality of portions that each correspond with each of said sub-time periods.

5. The method of claim 4 wherein said executable application is a calendar application and each of said sub-time periods correspond to sub-time period records within said calendar application.

6. The method of claim 5 wherein said time period is one month and said sub-time periods are days of said month.

7. The method of claim 6 wherein said days of said month on said calendar are bounded by lines and said reference includes said lines, and wherein said at least one extracted portion comprises one of said days.

8. The method of any one of claims 1-7 wherein said data schema is encoded within said reference and wherein determining said data schema is by decoding said reference.

9. The method of any one of claims 1-8 wherein said normalizing operation comprises at least one of deskewing, enlarging, shrinking, rotating, and color-adjusting.

10. The method of any one of claims 1-9 wherein said reference comprises a bar code.

11. The method of any one of claims 1-10 wherein said capturing is performed using a camera of a portable electronic device.

12. A portable electronic device configured to perform the methods according to claim 11.

13. The method of claim 11 further comprising sending a captured digital representation of said reference and said image to a server from said portable electronic device; and wherein said matching, said determining said normalizing operation, said generating, said decoding, said determining said data schema, and said storing are performed by said server.

14. A server configured to perform the operations according to claim 13.

15. The method of any one of claims 1-16 wherein said reference is imprinted on a removable portion of said portable electronic device and for placement in conjunction with said image prior to said capturing and wherein said image is an image of a three-dimensional article and further comprising calculating at least one dimension of said article based on at least one of said reference and said stored reference.

## Amended claims

### Amended claims in accordance with Rule 137(2) EPC.

**1.** A method for image data capture and storage by an electronic device, the method comprising:
optically capturing a digital representation of markings on a physical medium, comprising a reference portion and an image portion (505);
matching said reference portion with a stored reference;
determining a normalizing operation to normalize said reference portion based on a comparison between said reference portion and said stored reference (510);
generating a normalized image portion (525) by applying said normalizing operation (520) to said image portion;
decoding said reference portion to obtain a reference identifier (515);
determining a data schema (530) associated with said reference portion by said reference identifier, said data schema for mapping data to data records compatible with an executable application; and
storing at least a portion of said normalized image portion as image data associated with at least one of said data records according to said data schema (535).

**2.** The method of claim 1 further comprising:
determining a parsing operation associated with said reference portion;
extracting said at least one portion of said normalized image portion according to said parsing operation; and
storing said at least one extracted portion as image data associated with said data record.

**3.** The method of claim 2 wherein said parsing operation is encoded within said reference portion and wherein determining said parsing operation is by decoding said reference portion.

**4.** The method of claim 2 or claim 3 wherein said image portion is an image of a calendar spanning a time period and said reference portion identifies said calendar and said time period and wherein said reference portion or said stored reference identifies a plurality of sub-time periods within said time period and wherein said at least one extracted portion comprises a plurality of portions that each correspond with each of said sub-time periods.

**5.** The method of claim 4 wherein said executable application is a calendar application and each of said sub-time periods correspond to sub-time period records within said calendar application.

**6.** The method of claim 5 wherein said time period is one month and said sub-time periods are days of said month.

**7.** The method of claim 6 wherein said days of said month on said calendar are bounded by lines and said reference portion includes said lines, and wherein said at least one extracted portion comprises one of said days.

**8.** The method of any one of claims 1-7 wherein said data schema is encoded within said reference portion and wherein determining said data schema is by decoding said reference portion.

**9.** The method of any one of claims 1-8 wherein said normalizing operation comprises at least one of deskewing, enlarging, shrinking, rotating, and color-adjusting.

**10.** The method of any one of claims 1-9 wherein said reference portion comprises a bar code.

**11.** The method of any one of claims 1-10 wherein said capturing is performed using a camera of a portable electronic device.

**12.** A portable electronic device configured to perform the methods according to claim 11.

**13.** The method of claim 11 further comprising sending said captured digital representation of said reference portion and said image portion to a server from said portable electronic device; and wherein said matching, said determining said normalizing operation, said generating, said decoding, said determining said data schema, and said storing are performed by said server.

**14.** A server configured to perform the operations according to claim 13.
